# EUROPÄISCHE PATENTSCHRIFT

(11) **EP 3 792 111 B1**
(45) Veröffentlichungstag und Bekanntmachung des Hinweises auf die Patenterteilung: **25.10.2023**
(21) Anmeldenummer: 19196673.8
(22) Anmeldetag: 11.09.2019
(51) Int. Cl.: B60Q 1/00, F21S 43/14, F21S 43/239, F21S 43/20

(54) **LEUCHTE**
LAMP
LUMINAIRE

(43) Veröffentlichungstag der Anmeldung: 17.03.2021
(73) Patentinhaber: WEIDPLAS GmbH, 8630 Rüti (CH)
(72) Erfinder: BEFELEIN, Carsten, 85540 Haar (DE)
(74) Vertreter: Rutz, Andrea

(56) Entgegenhaltungen:
- EP-A1- 3 326 863
- EP-A1- 3 431 863
- WO-A1-2019/015829
- DE-B2- 2 062 472
- JP-A- 2003 317 512
- US-A- 2 220 145
- US-A- 4 558 401
- US-A1- 2006 083 016
- US-B1- 6 837 602

## Beschreibung

### TECHNISCHES GEBIET

Die vorliegende Erfindung betrifft eine Leuchte, insbesondere Signalleuchte, sowie ein Fahrzeug mit einer solchen Leuchte, insbesondere Signalleuchte.

### STAND DER TECHNIK

Bei Kraftfahrzeugen, aber auch bei anderen Fahrzeugen, ist es bekannt, im Innen- oder Aussenbereich Anzeige- und Ausleuchtelemente oder auch Signalelemente vorzusehen, um zum Beispiel den Fahrgastraum auszuleuchten oder um die Wahrnehmung der Insassen, aber auch von anderen Personen ausserhalb des Fahrgastraumes, zu lenken. So werden oft hinterleuchtbare Dekorelemente, Zierleisten oder Embleme verwendet, um zum Beispiel auf den Markennamen des Kraftfahrzeugs hinzuweisen, oder um einen speziellen Effekt zu bewirken und dabei die Wahrnehmung des Betrachters auf sich zu ziehen. Auch Bedien- und Betätigungselemente werden oft mit Anzeige- und Ausleuchtelementen versehen, welche beleuchtet werden, um die Erkennbarkeit der einzelnen Bedien- und Betätigungselemente insbesondere auch bei Nacht zu gewährleisten.

Die Dokumente JP 2003 317512 A, US 2006/083016 A, EP 3 326 863 A1, WO 2019/015829 A1, US 6,837,602 B1 und US 2,220,145 A offenbaren jeweils Leuchten für Fahrzeuge, bei denen Licht von der Rückseite her an eine transparente oder transluzente Abdeckung gestrahlt wird. Das Licht tritt durch die Abdeckung hindurch und wird von dieser aus in eine oder mehrere Richtungen abgestrahlt.

Das Dokument US 4,558,401 A offenbart eine Fahrzeugleuchte, bei welcher eine Vielzahl von opaken T-förmigen Wandelementen im lichtdurchlässigen Material einer Lampenabdeckung eingebettet sind.

Die DE 20 62 472 B2 offenbart eine Signalleuchte für Kraftfahrzeuge, bei welcher das von einer Lichtquelle ausgestrahlte Licht via einen Reflektor zu Sammellinsen gelangt, welche das Licht in Richtung von Öffnungen eines Gitters umlenken, das von einer durchscheinenden Abdeckscheibe getragen wird.

Die EP 3 431 863 A1 offenbart eine Fahrzeugleuchte, bei der in einem Innenraum Leuchtelemente angeordnet sind. Das von den Leuchtelementen ausgestrahlte Licht wird durch eine transluzente Abdeckung hindurch nach aussen hin abgestrahlt. Die Abdeckung weist einen transparent ausgebildeten Bereich auf, welcher ein Sichtfenster für eine ebenfalls im Innenraum angeordnete Kamera zu bildet.

### DARSTELLUNG DER ERFINDUNG

Es ist eine Aufgabe der vorliegenden Erfindung, eine ästhetisch ansprechende Leuchte anzugeben, welche die Wahrnehmung des Betrachters auf besonders effiziente Art und Weise auf sich zieht.

Zur Lösung dieser Aufgabe wird eine Leuchte vorgeschlagen, wie diese in Anspruch 1 angegeben ist. Ausserdem wird in Anspruch 15 ein Fahrzeug mit einer solchen Leuchte sowie in Anspruch 16 ein Verfahren zur Herstellung einer solchen Leuchte angegeben.

Die vorliegende Erfindung stellt also eine Leuchte, insbesondere eine Signalleuchte, für ein Fahrzeug, insbesondere für ein Kraftfahrzeug, zur Verfügung umfassend eine wenigstens bereichsweise transluzente Abdeckung mit einer Sichtseite und einer Rückseite, wobei die Leuchte, insbesondere Signalleuchte, ein Leuchtmittel aufweist, welches Licht in Richtung der Rückseite der Abdeckung ausstrahlt, und wobei die Abdeckung eine oder mehrere Lichtumlenkstrukturen aufweist zur gezielten Abstrahlung des an die Rückseite der Abdeckung ausgestrahlten Lichtes von der Sichtseite der Abdeckung. Die Abdeckung weist wenigstens ein erstes Lichtschott auf, wobei das erste Lichtschott wenigstens einen ersten Bereich und einen zweiten Bereich der Abdeckung vollständig optisch voneinander trennt. Die Abdeckung weist wenigstens einen ersten Bereich auf, der einen ersten Teilbereich der Rückseite der Abdeckung bildet, und einen zweiten Bereich, der einen zweiten Teilbereich der Rückseite der Abdeckung bildet, wobei der erste Bereich und / oder der zweite Bereich, bevorzugter der erste Bereich, die eine oder mehreren Lichtumlenkstrukturen aufweist. Die Leuchte umfasst einen Innenraum mit wenigstens einem ersten Innenraumbereich und einem zweiten Innenraumbereich. Das Leuchtmittel umfasst wenigstens ein erstes Leuchtmittel, das im ersten Innenraumbereich angeordnet ist, sowie ein zweites Leuchtmittel, das im zweiten Innenraumbereich angeordnet ist. Das erste Leuchtmittel strahlt Licht direkt auf den ersten Teilbereich der Rückseite der Abdeckung aus. Das zweite Leuchtmittel strahlt Licht direkt auf den zweiten Teilbereich der Rückseite der Abdeckung aus. Die Leuchte weist ausserdem wenigstens ein zweites Lichtschott auf, welches unmittelbar an das erste Lichtschott anschliesst und sich in den Innenraum der Leuchte hineinerstreckt. Das zweite Lichtschott trennt wenigstens den ersten Innenraumbereich und den zweiten Innenraumbereich wenigstens teilweise optisch voneinander.

Die eine oder die mehreren Lichtumlenkstrukturen sind dazu ausgebildet, das vom Leuchtmittel ausgestrahlte Licht gezielt in eine oder mehrere bestimmte Richtungen oder gezielt in einen oder mehrere bestimmte Richtungsbereiche umzulenken.

Dadurch, dass die von den Lichtumlenkstrukturen bewirkte Lichtumlenkung gezielt in eine oder mehrere bestimmte Richtungen oder gezielt in einen oder mehrere bestimmte Richtungsbereiche erfolgt, können vielfältige spezielle Effekte erzeugt werden, um die Aufmerksamkeit des Betrachters noch besser auf die Leuchte zu lenken. Darüber hinaus kann das vom Leuchtmittel ausgestrahlte Licht auf besonders effiziente Art und Weise benutzt werden.

Durch das Vorsehen von Lichtumlenkstrukturen kann eine gezielte Lichtumlenkung des vom Leuchtmittel ausgestrahlten Lichtes in eine oder mehrere bestimmte Richtungen oder in einen oder mehrere bestimmte Richtungsbereiche erreicht werden. Das Licht kann dadurch in eine oder mehrere einstellbare Richtungen oder in einen oder mehrere bestimmte Richtungsbereiche aus der Leuchte ausgekoppelt werden. Je nach Ausrichtung und Lage der Lichtumlenkstrukturen kann die Lichtauskopplung aus der Leuchte derart eingestellt werden, dass sie zum Beispiel fokussiert aus der Sichtseite der Abdeckung in eine bestimmte Richtung oder diffus in einen räumlich klar begrenzten Richtungsbereich erfolgt. Auch können die Lichtstrahlen von einem bestimmten zusammenhängenden Bereich einer Sichtseite der Leuchte aus zum Beispiel alle in im Wesentlichen parallele Richtungen ausgekoppelt werden. Die Lichtumlenkstrukturen erlauben zudem, dass ein besonders grosser Anteil des Lichtes, welches vom Leuchtmittel ausgestrahlt wird, von der Sichtseite der Abdeckung abgestrahlt werden kann. Dadurch kann die Leuchte insgesamt und bevorzugt zumindest die Sichtseite der Abdeckung, optisch besonders gut wahrnehmbar ausgestaltet werden. Des Weiteren kann mittels der Lichtumlenkstrukturen das Licht des Leuchtmittels, falls erwünscht, insbesondere homogen von wenigstens einem gewünschten Bereich der Sichtseite der Abdeckung abgestrahlt werden. Da die Lichtumlenkstrukturen genau definierte Strukturen sind, ist es möglich, mit Hilfe einer Leuchtdichtesimulationssoftware die Leuchtdichte an der Sichtseite der Abdeckung vorauszuberechnen, bzw. um umgekehrt dazu ausgehend von einer gewünschten Sichtseitenleuchtdichte die Anordnung und/oder Ausbildung der Lichtumlenkstrukturen der Abdeckung zu bestimmen. Auf diese Art und Weise kann sehr einfach eine beliebige gewünschte Leuchtdichteverteilung an der Sichtseite der Abdeckung erzielt werden.

Die optische Trennung des ersten Bereiches und des zweiten Bereiches der Abdeckung durch das erste Lichtschott bietet den Vorteil, dass Licht des Leuchtmittels, mittels welchem ein erster Teilbereich der Rückseite hinterstrahlt wird, nicht in den zweiten Bereich der Abdeckung übertreten kann und Licht des Leuchtmittels, mittels welchem ein zweiter Teilbereich der Rückseite hinterstrahlt wird, nicht in den ersten Bereich der Abdeckung übertreten kann. Durch das erste Lichtschott kann somit die gewünschte Abstrahlcharakteristik des Lichtes von der Sichtseite der Abdeckung, insbesondere vom ersten Teilbereich der Sichtseite und / oder vom zweiten Teilbereich der Sichtseite der Abdeckung genauer definiert werden.

Bevorzugt bildet wenigstens ein Teilbereich der Sichtseite der Abdeckung und / oder eine äussere Oberfläche einer auf der Sichtseite der Abdeckung angeordneten Schutzschicht und / oder eine Vorderseite eines flächigen Dekorelementes wenigstens teilweise, bevorzugt vollständig, die Sichtseite der Leuchte, insbesondere im Einbauzustand der Leuchte im Fahrzeug.

Bevorzugt ist die Leuchte als Signalleuchte ausgebildet. Die Signalleuchte ist beispielsweise als ein Rücklicht, ein Bremslicht, ein zusätzliches Bremslicht, ein Nebelrücklicht, ein zusätzliches Nebelrücklicht, ein Blinker, ein seitlicher Blinker, ein Scheinwerfer, insbesondere ein Rückfahrscheinwerfer, ausgebildet. Die Anwendung der Lichtumlenkstrukturen bei der erfindungsgemässen Leuchte erlaubt in besonderem Masse die Aufmerksamkeit eines Betrachters auf sich zu ziehen. Die erfindungsgemässe Leuchte eignet sich daher ganz besonders als Signalleuchte.

Bevorzugt bilden die eine oder mehreren Lichtumlenkstrukturen wenigstens einen Bereich der Sichtseite und / oder der Rückseite, bevorzugter wenigstens einen Bereich der Sichtseite, der Abdeckung und / oder die eine oder mehreren Lichtumlenkstrukturen sind im Inneren der Abdeckung angeordnet. Die eine oder mehreren Lichtumlenkstrukturen, welche wenigstens einen Bereich der Sichtseite und / oder der Rückseite der Abdeckung bilden sind somit an der Sichtseite und / oder an der Rückseite der Abdeckung angeordnet und können daher besonders einfach und kostengünstig, insbesondere mittels Spritzguss und / oder Laser, hergestellt werden. Die an der Sichtseite und / oder an der Rückseite der Abdeckung angeordneten Lichtumlenkstrukturen können insbesondere entsprechend den Angaben in der EP 2 853 806 A1 ausgebildet sein, deren kompletter Inhalt hiermit unter Bezugnahme miteinbezogen wird. Die Anordnung wenigstens einer Lichtumlenkstruktur der einen oder mehreren Lichtumlenkstrukturen im Inneren der Abdeckung schützt diese vor Umwelteinflüssen. Die im Inneren der Abdeckung angeordneten eine oder mehreren Lichtumlenkstrukturen weisen bevorzugt jeweils einen langgestreckten, insbesondere im Wesentlichen rotationssymmetrischen, Grundkörper mit bevorzugt einer oder mehreren daran angebrachten Elementen in Form von Fahnen auf. Vorteilhaft erstreckt sich die zumindest eine Fahne über 1/3 bis 2/3 der gesamten Längserstreckung des Grundkörpers. Die zumindest eine Fahne kann dabei insbesondere entlang einer ihrer Seiten über einen Bereich von 1/3 bis 2/3 der gesamten Längserstreckung des Grundkörpers mit diesem verbunden sein. Die Breite der Fahne, gemessen in eine senkrecht zur Längsachse des Grundkörpers stehende Richtung, beträgt bevorzugt höchstens 30 Mikrometer. Bevorzugt sind zumindest jeweils zwei Fahnen auf im Wesentlichen diametral einander gegenüberliegenden Seiten am Grundkörper angebracht. Die eine oder mehreren Fahnen bilden vorteilhaft als Ganzes jeweils eine im Wesentlichen ebene Fläche, die sich vom Grundkörper aus in eine radiale Richtung nach aussen hin erstreckt. Vorteilhaft ist der Grundkörper einteilig oder mehrteilig, bevorzugt einteilig ausgebildet. Der Grundkörper ist vorteilhaft entlang seiner Längsrichtung um ein Vielfaches grösser dimensioniert als in die senkrecht zu dieser Längsrichtung stehenden Richtungen. Der Grundkörper kann zudem entlang seiner Längsrichtung jeweils eine lokale Verdickung aufweisen, die in Bezug auf die Längsrichtung des Grundkörpers bevorzugt bei 15 - 35 Prozent der gesamten Längserstreckung des Grundkörpers angeordnet ist. Die Grundkörper der Lichtumlenkstrukturen weisen bevorzugt jeweils eine Längserstreckung von mindestens 100 Mikrometer, bevorzugter von mindestens 300 Mikrometer, auf. Die im Inneren der Abdeckung angeordneten eine oder mehreren Lichtumlenkstrukturen können insbesondere entsprechend den Angaben in der WO 2017/174548 A1 ausgebildet sein, deren kompletter Inhalt hiermit unter Bezugnahme miteinbezogen wird. Die eine oder mehreren Lichtumlenkstrukturen an der Sichtseite und / oder an der Rückseite der Abdeckung und / oder im Inneren der Abdeckung werden gemäss einer bevorzugten Ausführungsform mittels Laser hergestellt. Falls die eine oder mehreren Lichtumlenkstrukturen, insbesondere im Inneren der Abdeckung, mittels Laser hergestellt werden, so werden bevorzugt die eine oder mehreren Lichtumlenkstrukturen durch eine lokale Materialveränderung, insbesondere durch eine Aufschmelzung des Materials, der Abdeckung hergestellt. Das Material der Abdeckung, insbesondere im Inneren der Abdeckung, wird zur Herstellung der einen oder mehreren Lichtumlenkstrukturen also vorzugsweise an den entsprechenden Stellen mittels Wämeeinwirkung aufgeschmolzen und wieder abgekühlt. Es wird dadurch an den jeweiligen Stellen eine lokale Strukturveränderung des Abdeckungsmaterials bewirkt, wodurch die eine oder mehreren Lichtumlenkstrukturen gebildet werden. Das Material der Abdeckung wird vorzugsweise bei der Herstellung der einen oder mehreren Lichtumlenkstrukturen aber nicht karbonisiert. Falls die eine oder mehreren Lichtumlenkstrukturen an der Sichtseite und / oder an der Rückseite der Abdeckung angeordnet sind, so werden die eine oder mehreren Lichtumlenkstrukturen gemäss einer weiteren bevorzugten Ausführungsform mittels Spritzguss und / oder mittels Extrusion hergestellt. Die eine oder mehreren Lichtumlenkstrukturen können so auf eine kostengünstige Art und Weise hergestellt werden. Alternativ oder zusätzlich können die eine oder mehreren Lichtumlenkstrukturen an der Sichtseite und / oder an der Rückseite der Abdeckung beispielsweise aber auch mittels Fräsen und / oder Ätzen hergestellt werden.

Bevorzugt ist wenigstens eine Lichtumlenkstruktur der einen oder mehreren Lichtumlenkstrukturen der Abdeckung derart ausgebildet, so dass das vom Leuchtmittel der Leuchte ausgestrahlte Licht seitlich von der Leuchte in einem Winkel α von grösser als 0° bis 90°, bevorzugter von grösser als 0° bis 60°, noch bevorzugter von grösser als 0° bis 45°, von der Abdeckung abstrahlen kann. Hierdurch können insbesondere gesetzliche Erfordernisse einzelner Länder erfüllt werden, falls die Leuchte insbesondere als Signalleuchte ausgebildet ist. Dem Fachmann ist bekannt, wie solche Lichtumlenkstrukturen ausgebildet sein müssen, welche einen solchen Abstrahlwinkel α bewirken können. Der Winkel α wird, bevorzugt im Querschnitt durch die Leuchte gesehen, bevorzugt relativ zu einer Längsachse A einer Seitenwandung eines Gehäuses der Leuchte, gemessen. Bevorzugter wird der Winkel α, bevorzugt im Querschnitt durch die Leuchte gesehen, am Schnittpunkt einer Längsachse der Abdeckung, insbesondere einer Längsachse der Sichtseite oder Rückseite der Abdeckung, und der Längsachse Ader Seitenwandung des Gehäuses gemessen. Der Abstrahlwinkel ist bevorzugt gemäss dem Winkel α ausgebildet, falls die Leuchte als Signalleuchte ausgebildet ist. Im Falle eine Signalleuchte liegt der Winkel α bevorzugt im Bereich von grösser als 0° bis 45°.

Bevorzugt ist die Abdeckung wenigstens bereichsweise, bevorzugter vollständig, aus transluzentem oder transparentem Material, bevorzugt aus transparentem Material, hergestellt. Die Verwendung von transparentem Material für die Herstellung der Abdeckung bietet den Vorteil, dass die Sichtseite der Abdeckung besonders effizient ausleuchtbar ist. Bevorzugt ist das Material für die Herstellung der Abdeckung Kunststoff. Die Herstellung der Abdeckung wenigstens bereichsweise, bevorzugt vollständig, aus transluzentem oder transparentem Kunststoff ist vorteilhaft, da transluzenter oder transparenter Kunststoff für die Herstellung der einen oder mehreren Lichtumlenkstrukturen, insbesondere falls die eine oder mehreren Lichtumlenkstrukturen im Inneren der Abdeckung angeordnet sind, gut laserbar ist. Zudem können die eine oder mehreren Lichtumlenkstrukturen, falls diese an der Sichtseite und / oder an der Rückseite der Abdeckung angeordnet sind, kostengünstig mittels Spritzguss und / oder mittels Extrusion hergestellt werden. Falls die Abdeckung bereichsweise aus lichtundurchlässigem Material hergestellt ist, so ist das lichtundurchlässige Material bevorzugt Kunststoff. Eine Abdeckung umfassend wenigstens einen transluzenten oder transparenten Bereich sowie wenigstens einen lichtundurchlässigen Bereich wird vorzugsweise mittels Mehrkomponentenspritzguss, insbesondere mittels Zweikomponentenspritzguss, hergestellt.

Falls die Abdeckung wenigstens bereichsweise, bevorzugter vollständig, aus transluzentem oder transparentem Kunststoff hergestellt ist und der transluzente oder transparente Kunststoff wenigstens einen Thermoplasten aufweist oder aus wenigstens einem Thermoplasten hergestellt ist, so ist bevorzugt der wenigstens eine Thermoplast ausgewählt aus der Gruppe umfassend Polycarbonat (PC), Polystyrol (PS), ein aromatischer Polyester, Polymethylmethacrylat (PMMA), Polyethylenterephthalat (PET), Polymethacrylmethylimid (PMMI), ein Cyclo-Olefin-Copolymer (COC), ein Cyclo-Olefin-Polymer (COP), ein Styrol-Acrylnitril-Copolymer (SAN).

Falls die Abdeckung wenigstens bereichsweise, bevorzugt vollständig, aus transluzentem oder transparentem Kunststoff hergestellt ist und der transluzente oder transparente Kunststoff wenigstens einen Duroplasten aufweist oder aus wenigstens einem Duroplasten hergestellt ist, so ist der wenigstens eine Duroplast bevorzugt ausgewählt aus der Gruppe umfassend Polyurethan (PU), Polyurea (PUA).

Falls die Abdeckung wenigstens bereichsweise, bevorzugt vollständig, aus transluzentem oder transparentem Kunststoff hergestellt ist und der transluzente oder transparente Kunststoff wenigstens ein Elastomer aufweist oder aus wenigstens einem Elastomer hergestellt ist, so ist das wenigstens eine Elastomer beispielsweise Silikon, insbesondere Silikonkautschuk. Dem Fachmann sind Kunststoffe, insbesondere transluzente oder transparente Kunststoffe als auch lichtundurchlässige Kunststoffe, bekannt. Die Abdeckung kann beispielsweise aber auch wenigstens bereichsweise aus transluzentem oder transparentem Glas hergestellt sein.

Bevorzugt bilden die eine oder mehreren Lichtumlenkstrukturen wenigstens einen Bereich der Sichtseite und / oder der Rückseite, bevorzugt wenigstens einen Bereich der Sichtseite, der Abdeckung. Die eine Lichtumlenkstruktur wird bevorzugt durch eine einzige Erhebung oder durch eine einzige Vertiefung gebildet. Die mehreren Lichtumlenkstrukturen werden bevorzugt durch wenigstens eine einzelne Erhebung und / oder durch wenigstens eine einzelne Vertiefung gebildet. Bevorzugt wird die Erhebung und / oder die Vertiefung durch das Material der Abdeckung gebildet. Die eine oder mehreren Lichtumlenkstrukturen können aber auch durch Bedruckung der Sichtseite und / oder der Rückseite der Abdeckung hergestellt werden. Alternativ oder zusätzlich sind die eine oder mehreren Lichtumlenkstrukturen, welche wenigstens einen Bereich der Sichtseite und / oder der Rückseite, bevorzugt wenigstens einen Bereich der Sichtseite, der Abdeckung bilden, durch, bevorzugt im Querschnitt durch die Abdeckung gesehen, relativ zueinander geneigte, plane Oberflächenbereiche der Sichtseite ausgebildet. Die relativ zueinander geneigten, planen Oberflächenbereiche der Sichtseite und / oder der Rückseite werden bevorzugt mittels Laser und / oder mittels Spritzguss und / oder mittels Schleifen hergestellt. Die durch die Sichtseite und / oder durch die Rückseite der Abdeckung gebildeten eine oder mehreren Lichtumlenkstrukturen, aber auch die im Inneren der Abdeckung angeordneten eine oder mehreren Lichtumlenkstrukturen, bieten den Vorteil, dass das Leuchtmittel der Leuchte, welches bevorzugt an der Rückseite der Abdeckung angeordnet ist, insbesondere in der Draufsicht auf die Sichtseite der Abdeckung gesehen, nicht oder kaum mehr sichtbar ist. Dies ist insbesondere dann der Fall, falls die eine oder mehreren Lichtumlenkstrukturen wenigstens einen Bereich der Sichtseite und / oder der Rückseite, bevorzugt wenigstens einen Bereich der Sichtseite, der Abdeckung bilden und durch, bevorzugt im Querschnitt durch die Abdeckung gesehen, relativ zueinander geneigte, plane Oberflächenbereiche der Sichtseite ausgebildet sind. Ein derart ausgestalteter Bereich der Sichtseite und / oder der Rückseite der Abdeckung weist zudem, insbesondere in der Draufsicht auf diesen Bereich gesehen, eine brillante Erscheinungsform auf.

Bevorzugt sind die eine oder mehreren Lichtumlenkstrukturen auf die Sichtseite und / oder auf die Rückseite der Abdeckung aufgedruckt.

Bevorzugt bilden Erhebungen und / oder Vertiefungen der Abdeckung wenigstens einen Bereich der Sichtseite der Abdeckung, wobei der wenigstens eine Bereich der Sichtseite von einer Vielzahl von Facetten gebildet ist. Ein derart ausgestalteter Bereich der Sichtseite der Abdeckung weist, insbesondere in der Draufsicht auf diesen Bereich, eine brillante Erscheinungsform auf. Diese Facetten bewirken keine gezielte Lichtumlenkung wie die eine oder mehreren Lichtumlenkstrukturen der Abdeckung. Mit diesen Facetten kann somit die Sichtseite der Abdeckung nicht gezielt ausgeleuchtet werden wie es mit den einen oder mehreren Lichtumlenkstrukturen der Fall ist.

Bevorzugt ist wenigstens ein Bereich des wenigstens einen Bereiches der Sichtseite und / oder der Rückseite, bevorzugt wenigstens ein Bereich des wenigstens einen Bereiches der Sichtseite, welcher bevorzugt durch die eine oder mehreren Lichtumlenkstrukturen gebildet ist, insgesamt eben oder insgesamt gekrümmt ausgebildet. Bevorzugt ist der gekrümmte Bereich der Sichtseite und / oder der gekrümmte Bereich der Rückseite in Richtung der die Leuchte umgebenden Umgebung gekrümmt ausgebildet. Die Krümmung des Bereiches bietet den Vorteil, dass, zusätzlich zu den Lichtumlenkstrukturen, aufgrund der Krümmung des Bereiches, das Licht gezielt von der Sichtseite der Abdeckung in eine gewünschte Richtung abgestrahlt werden kann. Die Krümmung verstärkt zudem den Brillianteffekt, falls die eine oder mehreren Lichtumlenkstrukturen wenigstens einen Bereich der Sichtseite und / oder der Rückseite der Abdeckung bilden, wobei die eine oder mehreren Lichtumlenkstrukturen durch die, bevorzugt im Querschnitt durch die Abdeckung gesehen, relativ zueinander geneigten, planen Oberflächenbereiche der Sichtseite ausgebildet sind. Somit ist besonders bevorzugt der wenigstens eine Bereich der Abdeckung, welcher durch die, bevorzugt im Querschnitt durch die Abdeckung gesehen, relativ zueinander geneigten, planen Oberflächenbereiche der Sichtseite ausgebildet ist, gekrümmt, insbesondere insgesamt gekrümmt, ausgebildet.

Bevorzugt ist die Abdeckung insgesamt einstückig ausgebildet. Dies bietet den Vorteil. dass die Leuchte einfach und kostengünstig, insbesondere aus Kunststoff und insbesondere mittels Spritzguss, herstellbar ist.

Der erste Bereich der Abdeckung bildet bevorzugt einen ersten Teilbereich der Sichtseite der Abdeckung. Der zweite Bereich der Abdeckung bildet bevorzugt einen zweiten Teilbereich der Sichtseite der Abdeckung. Bevorzugt bilden wenigstens der erste Teilbereich der Sichtseite der Abdeckung und der zweite Teilbereich der Sichtseite der Abdeckung gemeinsam die gesamte Sichtseite der Abdeckung. Bevorzugt bilden wenigstens der erste Teilbereich der Rückseite der Abdeckung und der zweite Teilbereich der Rückseite der Abdeckung gemeinsam die gesamte Rückseite der Abdeckung.

Bevorzugt ist der erste Bereich wenigstens teilweise, bevorzugt vollständig, umlaufend um den zweiten Bereich ausgebildet. Bevorzugt ist der erste Bereich und / oder der zweite Bereich der Abdeckung, bevorzugt in der Draufsicht auf die Sichtseite der Abdeckung gesehen, kreisförmig oder mehreckig, ausgebildet. Grundsätzlich kann der erste Bereich und / oder der zweite Bereich der Abdeckung, bevorzugt in der Draufsicht auf die Abdeckung, eine beliebige Form aufweisen. Die Abdeckung insgesamt oder der erste Bereich und / oder der zweite Bereich der Abdeckung kann aber auch, bevorzugt in der Draufsicht auf die Sichtseite der Abdeckung, in der Form eines graphischen Elementes ausgebildet sein. Bevorzugt schliesst der erste Bereich unmittelbar an den zweiten Bereich an.

Bevorzugt ist der durch den ersten Bereich der Abdeckung gebildete erste Teilbereich der Sichtseite der Abdeckung insgesamt gekrümmt ausgebildet und der durch den zweiten Bereich der Abdeckung gebildete zweite Teilbereich der Sichtseite der Abdeckung bevorzugt insgesamt plan ausgebildet. Diese Ausführungsform ist ideal für den Fall, dass der erste Bereich eine Signalfunktion ausüben soll, da das Licht des Leuchtmittels der Leuchte über den gekrümmten ersten Teilbereich der Sichtseite, bevorzugt in der Draufsicht auf die Sichtseite der Abdeckung gesehen, seitlich von der Sichtseite der Abdeckung weggestrahlt werden kann.

Bevorzugt weist die Abdeckung, zusätzlich zu dem ersten Bereich und dem zweiten Bereich, einen dritten Bereich auf, wobei der dritte Bereich beispielsweise zwischen dem ersten Bereich und dem zweiten Bereich angeordnet ist. Bevorzugt schliesst der dritte Bereich unmittelbar an den ersten Bereich und den zweiten Bereich an. Bevorzugt ist der dritte Bereich umlaufend um den zweiten Bereich ausgebildet und der erste Bereich ist umlaufend um den dritten Bereich ausgebildet.

Bevorzugt ist der dritte Bereich derart ausgebildet, so dass das vom Leuchtmittel auf die vom dritten Bereich gebildeten dritten Teilbereich der Rückseite der Abdeckung abgestrahlte Licht vom dritten Bereich, insbesondere vom dritten Teilbereich der Rückseite, um einen Winkel β umgelenkt wird, insbesondere um einen Winkel β von beispielsweise ca. 90° umgelenkt wird, so dass das umgelenkte Licht beispielsweise entlang des zweiten Teilbereiches der Sichtseite oder entlang eines auf dem zweiten Teilbereich der Sichtseite angeordneten flächigen Dekorelementes gestrahlt wird. Dies bietet den Vorteil, dass zusätzliche Lichteffekte erzielt werden können. Für die Lichtumlenkung ist der dritte Bereich, insbesondere der vom dritten Bereich gebildete dritte Teilbereich der Rückseite der Abdeckung, bevorzugt bereichsweise lichtreflektierend ausgebildet. Bevorzugt weist der dritte Bereich der Abdeckung für die Lichtumlenkung einen relativ zum zweiten Bereich der Abdeckung erhabenen ersten Abschnitt auf, welcher bevorzugt in Richtung der die Leuchte umgebenden Umgebung sich erstreckt. Für die Lichtumlenkung durch Reflexion ist der erste Abschnitt des dritten Bereiches, insbesondere die durch den ersten Abschnitt gebildete Rückseite der Abdeckung, bevorzugt in einem Winkel γ von grösser als 0° bis kleiner als 90°, bevorzugter in einem Winkel γ von 30° - 60°, insbesondere in einem Winkel γ von ca. 45°, geneigt zu einer Längsachse B des zweiten Teilbereiches der Sichtseite. Durch die Auswahl unterschiedlicher Winkel γ können unterschiedliche Leuchteffekte erzielt werden. Bevorzugt weist der dritte Bereich einen zweiten Abschnitt auf, welcher unmittelbar an den ersten Abschnitt anschliesst. Bevorzugt ist der erste Abschnitt am ersten Bereich der Abdeckung befestigt, bevorzugt lösbar befestigt, und bevorzugt am zweiten Abschnitt befestigt, bevorzugt lösbar befestigt. Falls der erste Abschnitt des dritten Bereiches lichtreflektierend ausgebildet ist, so ist der zweite Abschnitt des dritten Bereiches bevorzugt transluzent oder transparent ausgebildet, so dass das vom ersten Abschnitt umgelenkte Licht durch den zweiten Abschnitt hindurchtreten und sodann beispielsweise entlang des zweiten Teilbereiches der Sichtseite oder entlang des auf dem zweiten Teilbereich der Sichtseite angeordneten flächigen Dekorelementes gestrahlt werden kann. Gemäss einer weiteren bevorzugten Ausführungsform weist der dritte Bereich eine oder mehrere Lichtumlenkstrukturen für die Lichtumlenkung auf. Bevorzugt ist der zweite Teilbereich der Sichtseite und / oder das auf dem zweiten Teilbereich der Sichtseite angeordnete flächige Dekorelement insgesamt plan ausgebildet. Dies bietet den Vorteil, dass der zweite Teilbereich der Sichtseite oder das flächige Dekorelement ohne Hindernis mit dem umgelenkten Licht überstrahlt werden kann.

Bevorzugt weist das Leuchtmittel ein drittes Leuchtmittel auf, welches den durch den dritten Bereich gebildeten dritten Teilbereich der Rückseite der Abdeckung anstrahlen, bevorzugt direkt anstrahlen. Bevorzugt ist der dritte Bereich der Abdeckung, bevorzugt in der Draufsicht auf die Sichtseite der Abdeckung gesehen, kreisförmig oder mehreckig ausgebildet. Die Form des dritten Bereiches der Abdeckung kann aber auch, bevorzugt in der Draufsicht auf die Sichtseite der Abdeckung, beliebig ausgebildet sein.

Bevorzugt ist die Abdeckung aufweisend wenigstens den ersten Bereich und den zweiten Bereich einstückig ausgebildet. Dies bietet den Vorteil, dass die Abdeckung besonders kostengünstig, insbesondere aus Kunststoff und insbesondere im Spritzguss, herstellbar ist.

Bevorzugt weist die Leuchte ein Gehäuse auf. Das Gehäuse ist bevorzugt aus Metall oder Kunststoff, bevorzugt aus Kunststoff, hergestellt. Die Herstellung des Gehäuses aus Kunststoff bietet den Vorteil, dass die Leuchte kostengünstig sowie im Spritzguss herstellbar ist. Bevorzugt umfasst das Gehäuse wenigstens eine Bodenwandung sowie eine Seitenwandung. Bevorzugt ist die Bodenwandung mit der Seitenwandung einstückig verbunden. Bevorzugt ist das Gehäuse wenigstens bereichsweise, bevorzugt vollständig, lichtundurchlässig ausgebildet. Dies bietet den Vorteil, dass das vom Leuchtmittel abgestrahlte Licht wenigstens teilweise oder sogar vollständig die Leuchte über die Abdeckung verlässt. Bevorzugt ist die Abdeckung am Gehäuse, insbesondere an der Seitenwandung des Gehäuses, befestigt, bevorzugt lösbar befestigt. "Lösbar befestigt" heisst in diesem Zusammenhang, dass die Abdeckung beispielsweise mittels Rastmittel am Gehäuse, insbesondere an der Seitenwandung des Gehäuses, befestigt ist. Dies bietet den Vorteil, dass die Abdeckung und / oder das Gehäuse leicht austauschbar ist. Die Abdeckung kann aber beispielsweise auch mittels eines Klebstoffes am Gehäuse unlösbar befestigt sein. Dies bietet den Vorteil, dass die Leuchte gegenüber dessen Umgebung beispielsweise dicht bezüglich Flüssigkeiten ist. "Unlösbar befestigt" heisst in diesem Zusammenhang, dass die Abdeckung vom Gehäuse nur getrennt werden kann, falls die Abdeckung, das Gehäuse oder der Klebstoff beschädigt wird.

Bevorzugt ist innerhalb des Innenraumes der Leuchte, bevorzugt innerhalb eines wenigstens vom Gehäuse und gegebenenfalls zusätzlich von der Abdeckung begrenzten Innenraumes, das Leuchtmittel angeordnet. Bevorzugt ist das Gehäuse zum Innenraum hin lichtreflektierend ausgebildet. Dies bietet den Vorteil, dass das vom im Innenraum angeordneten Leuchtmittel ausgestrahlte Licht effizient zur Rückseite der Abdeckung geleitet werden kann. Bevorzugt ist hierzu das Gehäuse wenigstens bereichsweise aus einem lichtreflektierenden Material hergestellt und / oder auf einer dem Innenraum zugewandten Oberfläche des Gehäuses ist eine lichtreflektierende Beschichtung angeordnet.

Bevorzugt ist der erste Bereich der Abdeckung am Gehäuse, insbesondere an der Seitenwandung des Gehäuses, befestigt, bevorzugter lösbar befestigt. "Lösbar befestigt" heisst in diesem Zusammenhang, dass der erste Bereich beispielsweise mittels Rastmittel am Gehäuse, insbesondere an der Seitenwandung des Gehäuses, befestigt ist. Der erste Bereich der Abdeckung kann beispielsweise aber auch mittels eines Klebstoffes am Gehäuse, insbesondere an einer Seitenwandung des Gehäuses, unlösbar befestigt sein. Dies bietet den Vorteil, dass die Leuchte gegenüber deren Umgebung beispielsweise dicht bezüglich Flüssigkeiten ist. "Unlösbar befestigt" heisst in diesem Zusammenhang, dass der erste Bereich der Abdeckung vom Gehäuse nur getrennt werden kann, falls der erste Bereich der Abdeckung, das Gehäuse oder der Klebstoff beschädigt wird.

Bevorzugt ist der zweite Bereich der Abdeckung an dem ersten Bereich der Abdeckung befestigt, bevorzugter lösbar befestigt. "Lösbar befestigt" heisst in diesem Zusammenhang, dass der zweite Bereich beispielsweise mittels Rastmittel am ersten Bereich befestigt ist. Der zweite Bereich der Abdeckung kann beispielsweise aber auch mittels eines Klebstoffes am ersten Bereich der Abdeckung unlösbar befestigt sein. Die Befestigung mittels Klebstoff bietet den Vorteil, dass die Leuchte gegenüber dessen Umgebung beispielsweise dicht bezüglich Flüssigkeiten ist. "Unlösbar befestigt" heisst in diesem Zusammenhang, dass der erste Bereich vom zweiten Bereich nur getrennt werden kann, falls der erste Bereich, der zweite Bereich oder der Klebstoff beschädigt wird. Die lösbare Befestigung des ersten Bereiches und / oder des zweiten Bereiches der Abdeckung bietet den Vorteil, dass diese Bereiche leicht ausgetauscht und somit leicht repariert werden können. Zudem kann auf einfache Weise die Lichtabstrahlcharakteristik von der Sichtseite der Abdeckung verändert werden, indem der erste Bereich und / oder der zweite Bereich durch einen ersten Bereich und / oder durch einen zweiten Bereich mit anderen Lichtumlenkstrukturen ersetzt wird.

Bevorzugt ist auf dem ersten Teilbereich der Sichtseite und / oder rückseitig zum ersten Teilbereich der Rückseite und / oder auf dem zweiten Teilbereich der Sichtseite und / oder rückseitig zum zweiten Teilbereich der Rückseite ein wenigstens bereichsweise transluzentes oder transparentes, flächiges Dekorelement, insbesondere eine Dekorfolie, mit einer Vorderseite und einer Rückseite, angeordnet, welches ein graphisches Element aufweist. Das graphische Element ist beispielsweise ein Symbol, ein Ornament, ein Buchstabe, ein Schriftzug oder ein Logo. Das flächige Dekorelement ist bevorzugt für die Bildung des graphischen Elementes auf der Vorderseite und / oder auf der Rückseite bedruckt. Möglich ist auch, dass das flächige Dekorelement zur Bildung des graphischen Elementes lichtundurchlässige sowie transluzente oder transparente Bereiche aufweist. Alternativ oder zusätzlich ist der erste Bereich und / oder der zweite Bereich der Abdeckung selbst als flächiges Dekorelement ausgebildet. Falls die Abdeckung selbst als flächiges Dekorelement ausgebildet ist, so weist die Abdeckung beispielsweise lichtundurchlässige sowie transluzente oder transparente Bereiche auf, welche das graphische Element bilden. Gemäss einer weiteren bevorzugten Ausführungsform ist flächige Dekorelement innerhalb der Abdeckung, bevorzugt innerhalb des ersten Bereiches und / oder innerhalb des zweiten Bereiches der Abdeckung angeordnet.

Bevorzugt ist das graphische Element, bevorzugt in der Draufsicht auf die Sichtseite der Abdeckung, sichtbar, falls das flächige Dekorelement durch Licht des Lichtelementes hinterleuchtet wird. Falls das flächige Dekorelement nicht mit Licht des Leuchtmittels hinterleuchtet wird, so ist bevorzugt das graphische Element, bevorzugt in der Draufsicht auf die Sichtseite, nicht sichtbar. Dies wird auch als Tag- / Nachdesign bezeichnet.

Bevorzugt weist die Leuchte umfassend den dritten Bereich einen zweiten Bereich auf, welcher selbst als flächiges Dekorelement ausgebildet ist. Alternativ oder zusätzlich kann auf dem zweiten Teilbereich der Sichtseite und / oder rückseitig zum zweiten Teilbereich der Rückseite, ein flächiges Dekorelement angeordnet sein. Bei dieser Ausführungsform ist bevorzugt der zweite Bereich, welcher selbst als flächiges Dekorelement ausgebildet ist und / oder das flächige Dekorelement lichtundurchlässig ausgebildet.

Bevorzugt ist rückseitig zum ersten Teilbereich der Rückseite der Abdeckung und / oder rückseitig zum zweiten Teilbereich der Rückseite der Abdeckung und / oder rückseitig zum flächigen Dekorelement, ein flächiger Diffusor angeordnet. Der Diffusor bietet den Vorteil, dass das Licht vergleichmässigt wird, bevor dieses zum Beispiel in das flächige Dekorelement oder in den ersten Bereich der Abdeckung und / oder in zweiten Bereich der Abdeckung gelangt. Gemäss einer bevorzugten Ausführungsform ist der erste Bereich und / oder der zweite Bereich der Abdeckung, bevorzugt der zweite Bereich der Abdeckung, als Diffusor ausgebildet.

Bevorzugt ist das erste Lichtschott wenigstens bereichsweise, bevorzugt vollständig, lichtundurchlässig ausgebildet. Das erste Lichtschott ist bevorzugt aus Kunststoff hergestellt. Dieser Kunststoff ist beispielsweise ein transluzenter oder transparenter Kunststoff, welcher mit lichtundurchlässigem Farbstoff gefärbt ist, oder ein lichtundurchlässiger Kunststoff. Falls das erste Lichtschott aus Kunststoff hergestellt ist, so ist bevorzugt der verbleibende Teil der Abdeckung, welcher bevorzugt aus transluzentem oder transparentem Material hergestellt ist, ebenfalls aus Kunststoff hergestellt. Dies bietet den Vorteil, dass die Abdeckung kostengünstig, insbesondere mittels Mehrkomponentenspritzguss, insbesondere Zweikomponentenspritzguss, herstellbar ist. Gemäss eine weiteren bevorzugten Ausführungsform ist die Abdeckung, bevorzugt insgesamt, aus transluzentem oder transparentem Kunststoff hergestellt und das erste Lichtschott ist mittels Laser hergestellt. Mittels des Lasers wird der Kunststoff der Abdeckung beispielsweise karbonisiert und so das wenigstens eine lichtundurchlässige erste Lichtschott der Abdeckung hergestellt. Die Herstellung des ersten Lichtschotts mittels Laser bietet den Vorteil, dass erste Lichtschotts verschiedenster Geometrien einfach herstellbar sind.

Bevorzugt erstreckt sich wenigstens ein erstes Lichtschott des wenigstens einen ersten Lichtschotts von der Rückseite zur Sichtseite der Abdeckung. Bevorzugt ist, im Querschnitt durch die Abdeckung gesehen, wenigstens ein erstes Lichtschott geradlinig ausgebildet und schliesst bevorzugt mit der Rückseite der Abdeckung, sowie bevorzugt mit der Sichtseite der Abdeckung, einen Winkel von ca. 90° ein.

Bevorzugt schliesst der erste Innenraumbereich unmittelbar an den ersten Bereich der Abdeckung und der zweite Innenraumbereich unmittelbar an den zweiten Bereich der Abdeckung an. Bevorzugt trennt das zweite Lichtschott wenigstens den ersten Innenraumbereich vom zweiten Innenraumbereich vollständig optisch voneinander. Dies bietet den Vorteil, dass weniger oder kein Licht vom ersten Innenraumbereich in den zweiten Innenraumbereich oder umgekehrt eintreten kann. Bevorzugt ist das zweite Lichtschott wenigstens bereichsweise, bevorzugt vollständig, lichtundurchlässig ausgebildet. Das zweite Lichtschott ist bevorzugt aus Kunststoff hergestellt. Dieser Kunststoff ist beispielsweise ein transluzenter oder transparenter Kunststoff, welcher mit lichtundurchlässigem Farbstoff gefärbt ist, oder ein lichtundurchlässiger Kunststoff.

Bevorzugt weist die Abdeckung das wenigstens eine erste Lichtschott auf, wobei das erste Lichtschott wenigstens den ersten Bereich und den zweiten Bereich der Abdeckung vollständig optisch voneinander trennt, wobei die Leuchte zudem das wenigstens eine zweite Lichtschott umfasst, welches wenigstens den ersten Innenraumbereich und den zweiten Innenraumbereich des Innenraumes der Leuchte wenigstens teilweise, bevorzugt vollständig, optisch voneinander trennt und wobei wenigstens ein zweites Lichtschott des wenigstens einen zweiten Lichtschotts unmittelbar an das erste Lichtschott anschliesst. Diese Ausführungsform bietet den Vorteil das weniger Licht oder sogar kein Licht im Bereich der Abdeckung vom ersten Bereich in den zweiten Bereich oder umgekehrt übergehen kann und ebenfalls im Innenraum der Leuchte weniger oder gar kein Licht vom ersten Innenraumbereich in den zweiten Innenraumbereich oder umgekehrt übergehen kann.

Bevorzugt weist das Leuchtmittel wenigstens eine LED, wenigstens ein flächiges Leuchtmittel, wie zum Beispiel eine Leuchtfolie, wie beispielsweise eine OLED oder eine Elektrolumineszenzfolie, oder wenigstens eine Glühbirne auf. Im Falle von mehreren LEDs können diese als RGB-LED ausgebildet sein. Eine einzelne LED der RGB-LED kann zum Beispiel als weisse LED, rote LED. grüne LED oder blaue LED ausgebildet sein.

Das erste Leuchtmittel umfasst bevorzugt wenigstens eine erste LED. Das zweite Leuchtmittel weist bevorzugt wenigstens eine zweite LED auf. Das erste Leuchtmittel und / oder das zweite Leuchtmittel kann jeweils aber auch wenigstens ein flächiges Leuchtmittel, wie zum Beispiel eine Leuchtfolie, wie beispielsweise eine OLED oder eine Elektrolumineszenzfolie, oder wenigstens eine Glühbirne umfassen. Bevorzugt weist das erste Leuchtmittel mehrere weisse LEDs auf, insbesondere falls der erste Teilbereich der Sichtseite der Abdeckung eine Signalfunktion ausübt. Bevorzugt weist das zweite Leuchtmittel unterschiedlich farbige LEDs auf, insbesondere falls der zweite Teilbereich der Sichtseite der Abdeckung eine Dekorfunktion ausübt.

Bevorzugt ist das graphische Element, bevorzugt in der Draufsicht auf die Sichtseite der Abdeckung, sichtbar, falls das graphische Element durch Licht des Lichtelementes hinterleuchtet wird oder nicht durch Licht des Lichtelementes hinterleuchtet wird. Diese Ausführungsform ist insbesondere dann bevorzugt, falls die Leuchte als Signalleuchte ausgebildet ist. Die Signalleuchte wirkt somit stets dekorativ, da das graphische Element bei Hinterleuchtung sowie bei Nichthinterleuchtung sichtbar ist, und die Signalfunktion wird durch die Signalleuchte nur bei Bedarf ausgeübt.

Bevorzugt weist das erste Leuchtmittel mehrere erste LEDs und / oder mehrere erste flächige Leuchtmittel und / oder mehrere erste Glühbirnen auf, welche bevorzugt selbst in der Form des graphischen Elementes angeordnet sind. Dies bietet den Vorteil, dass das erste Leuchtmittel selbst an der Sichtseite der Abdeckung das graphische Element erzeugen kann.

Bevorzugt weist das zweite Leuchtmittel mehrere zweite LEDs und / oder mehrere zweite flächige Leuchtmittel und / oder mehrere zweite Glühbirnen auf, welche bevorzugt selbst in der Form des graphischen Elementes angeordnet sind. Dies bietet den Vorteil, dass das zweite Leuchtmittel selbst an der Sichtseite der Abdeckung das graphische Element erzeugen kann.

Bevorzugt ist die Abdeckung und / oder das Gehäuse, bevorzugt in der Draufsicht auf die Sichtseite der Abdeckung, selbst in der Form eines graphischen Elementes ausgebildet.

Das direkte Anstrahlen des ersten Teilbereiches und / oder des zweiten Teilbereiches der Rückseite der Abdeckung bietet den Vorteil, dass das vom Leuchtmittel ausgestrahlte Licht im Wesentlichen ohne Verlust auf den ersten Teilbereich und / oder auf den zweiten Teilbereich der Rückseite der Abdeckung gelangt, so dass die Ausleuchtung der Sichtseite der Abdeckung, insbesondere durch die eine oder mehreren Lichtumlenkstrukturen, besser vorausbestimmbar ist.

Bevorzugt ist das erste Leuchtmittel, welches bevorzugt als wenigstens eine erste LED ausgebildet ist, im Vergleich zum zweiten Leuchtmittel, welches bevorzugt als wenigstens eine zweite LED ausgebildet ist, derart ausgebildet, dass das erste Leuchtmittel Licht mit einer grösseren Leuchtstärke ausstrahlen kann als das zweite Leuchtmittel. In diesem Fall hat bevorzugt der erste Teilbereich der Sichtseite eine Signalfunktion und der zweite Teilbereich der Sichtseite eine Dekorfunktion. Gemäss einer weiteren bevorzugten Ausführungsform ist das zweite Leuchtmittel, welches bevorzugt als wenigstens eine zweite LED ausgebildet ist, im Vergleich zum ersten Leuchtmittel, welches bevorzugt als wenigstens eine erste LED ausgebildet ist, derart ausgebildet, dass das zweite Leuchtmittel Licht mit einer grösseren Leuchtstärke ausstrahlen kann als das erste Leuchtmittel. In diesem Fall hat bevorzugt der zweite Teilbereich der Sichtseite eine Signalfunktion und der erste Teilbereich der Sichtseite eine Dekorfunktion. Bevorzugt sind das erste Leuchtmittel und das zweite Leuchtmittel unabhängig voneinander steuerbar. Besonders bevorzugt sind das ersten Leuchtmittel und das zweite Leuchtmittel bezüglich ihrer Lichtabstrahlung, insbesondere bezüglich ihrer Leuchtstärke, unabhängig voneinander steuerbar. Alternativ oder zusätzlich ist ein Bereich der Abdeckung, d.h. zum Beispiel der erste Bereich oder der zweite Bereich, welcher eine Signalfunktion ausüben soll, lichtdurchlässiger im Vergleich zu einem Bereich der Abdeckung, d.h. zum Beispiel der ersten Bereich oder der zweiten Bereich, welcher eine dekorative Funktion ausüben soll. Die Ausgestaltung des ersten und zweiten Leuchtmittels, relativ zueinander Licht in unterschiedlichen Leuchtstärken auszustrahlen, bietet den Vorteil, dass die Leuchte als Signalleuchte und gleichzeitig als Dekorleuchte wirken kann. So kann der erste Teilbereich der Sichtseite der Abdeckung dekorativ wirken und der zweite Teilbereich der Sichtseite der Abdeckung eine Signalfunktion ausüben. Alternativ kann der zweite Teilbereich der Sichtseite der Abdeckung dekorativ wirken und der erste Teilbereich der Sichtseite der Abdeckung die Signalfunktion ausüben. Soll für einen Betrachter der Sichtseite der Abdeckung, insbesondere der Sichtseite der Leuchte, beispielsweise der erste Teilbereich der Sichtseite der Abdeckung eine Signalfunktion ausüben und der zweite Teilbereich der Sichtseite der Abdeckung eine dekorative Funktion aufweisen, so wird bevorzugt der erste Teilbereich der Rückseite der Abdeckung durch das erste Leuchtmittel stärker mit Licht angestrahlt, insbesondere stärker direkt mit Licht angestrahlt, als das zweite Leuchtmittel den zweiten Teilbereich der Rückseite der Abdeckung anstrahlt, insbesondere direkt anstrahlt. Selbstverständlich kann entsprechend, wie gerade beschrieben, auch der erste Teilbereich der Sichtseite der Abdeckung die dekorative Funktion der Leuchte und der zweite Teilbereich der Sichtseite der Abdeckung die Signalfunktion der Leuchte bewirken.

Falls der erste Teilbereich der Sichtseite der Abdeckung die Signalfunktion ausüben soll und der zweite Teilbereich der Sichtseite der Abdeckung dekorativ wirken soll, so ist bevorzugt die Belichtung des ersten Teilbereiches der Rückseite der Abdeckung durch das erste Leuchtmittel, bevorzugt zum Zeitpunkt der Signalausübung, grösser als die Belichtung des zweiten Teilbereiches der Rückseite der Abdeckung durch das zweite Leuchtmittel. Bevorzugt weist die Belichtung des zweiten Teilbereiches der Rückseite der Abdeckung zum Zeitpunkt der Signalausübung den Wert 0 auf.

Bevorzugt weist die Leuchte wenigstens das erste Leuchtmittel und das zweite Leuchtmittel sowie wenigstens eine zweites Lichtschott, welches bevorzugt als Trennwand ausgebildet ist, auf, wobei das erste Leuchtmittel im ersten Innenraumbereich der Leuchte angeordnet ist und das zweite Leuchtmittel im zweiten Innenraumbereich der Leuchte angeordnet ist, und wobei das zweite Lichtschott den ersten Innenraumbereich und den zweiten Innenraumbereich wenigstens teilweise, bevorzugt im Wesentlichen vollständig, bevorzugter vollständig, optisch voneinander trennt. Dies bietet den Vorteil, dass der erste Teilbereich der Sichtseite der Abdeckung und der zweite Teilbereich der Sichtseite der Abdeckung gezielter ausgeleuchtet werden kann. Bevorzugt ist das zweite Lichtschott wenigsten bereichsweise, bevorzugter vollständig, lichtundurchlässig ausgebildet. Bevorzugt ist das zweite Lichtschott aus Kunststoff hergestellt. Der Kunststoff ist beispielsweise ein transparenter oder ein transluzenter Kunststoff, welcher lichtundurchlässig gefärbt ist und / oder das zweite Lichtschott ist beispielsweise aus einem lichtundurchlässigen Kunststoff hergestellt. Bevorzugt ist das zweite Lichtschott mit der Abdeckung einstückig oder zweistückig verbunden, wobei diese Anordnung aufweisend das zweite Lichtschott und die Abdeckung bevorzugt mittels Mehrkomponentenspritzguss, insbesondere Zweikomponentenspritzguss, hergestellt ist. Gemäss einer weiteren bevorzugten Ausführungsform ist das zweite Lichtschott mit dem Gehäuse einstückig oder zweistückig verbunden, wobei diese Anordnung aufweisend das zweite Lichtschott und das Gehäuse bevorzugt mittels Mehrkomponentenspritzguss, insbesondere Zweikomponentenspritzguss, hergestellt ist. Die einstückige Verbindung bzw. die zweistückige Verbindung oder der Mehrkomponentenspritzguss, insbesondere Zweikomponentenspritzguss, bieten jeweils den Vorteil, dass die Leuchte kostengünstig herstellbar ist. Bevorzugt weist die Leuchte gemäss dieser bevorzugten Ausführungsform zusätzlich noch das wenigstens eine erste Lichtschott auf.

Bevorzugt weist die Leuchte, insbesondere der Innenraum der Leuchte, wenigstens einen Lichtleiter auf über welchen das vom Leuchtmittel ausgestrahlte Licht auf die Rückseite der Abdeckung gelangt. Bevorzugt weist der Lichtleiter eine Vorderseite und eine Rückseite sowie eine Seitenfläche auf, wobei die Seitenfläche die Vorderseite und die Rückseite miteinander verbindet, und wobei bevorzugt die Vorderseite des Lichtleiters der Rückseite der Abdeckung zugewandt ist.

Bevorzugt umfasst die Leuchte das Leuchtmittel aufweisend wenigstens das erste Leuchtmittel sowie den wenigstens einen Lichtleiter über welchen das vom Leuchtmittel ausgestrahlte Licht auf die Rückseite der Abdeckung gelangt, wobei das erste Leuchtmittel derart im Innenraum der Leuchte angeordnet ist, so dass das vom ersten Leuchtmittel abgestrahlte Licht teilweise auf den ersten Teilbereich der Rückseite der Abdeckung gelangt sowie gleichzeitig teilweise in den Lichtleiter eingestrahlt und über den Lichtleiter auf den zweiten Teilbereich der Rückseite der Abdeckung gelangt. Bevorzugt weist das Leuchtmittel, zusätzlich zum ersten Leuchtmittel das zweite Leuchtmittel auf mit welchem Licht über die Rückseite der Lichtleiters in den Lichtleiter eingestrahlt wird, wobei das eingestrahlte Licht durch den Lichtleiter hindurchtritt und über die Vorderseite des Lichtleiters auf den zweiten Teilbereich der Rückseite der Abdeckung abgestrahlt wird. Bevorzugt weist der Lichtleiter eine oder mehrere Lichtumlenkstrukturen auf. Bevorzugt bilden die eine oder mehreren Lichtumlenkstrukturen wenigstens einen Bereich der Vorderseite und / oder der Rückseite des Lichtleiters und / oder die eine oder mehreren Lichtumlenkstrukturen sind im Inneren des Lichtleiters angeordnet. Bevorzugt werden die eine oder mehreren Lichtumlenkstrukturen durch das Material des Lichtleiters gebildet. Alternativ oder zusätzlich können die eine oder mehreren Lichtumlenkstrukturen auch auf die Vorderseite und / oder auf die Rückseite des Lichtleiters aufgedruckt sein. Insbesondere falls das Licht des ersten Leuchtmittels über die Seitenfläche und / oder über die Rückseite des Lichtleiters in den Lichtleiter gelangt und insbesondere falls die Vorderseite des Lichtleiters dem zweiten Teilbereich der Rückseite der Abdeckung zugewandt ist, kann das sich im Lichtleiter fortpflanzende Licht über die eine oder mehrere Lichtumlenkstrukturen, welche insbesondere an der Rückseite und / oder im Inneren des Lichtleiters angeordnet sind, in die Richtung des zweiten Teilbereiches der Rückseite der Abdeckung umgelenkt werden. Bevorzugt sind die eine oder mehreren Lichtumlenkstrukturen in der Form eines graphischen Elementes angeordnet, so dass, bevorzugt bei eingeschaltetem Leuchtmittel, bevorzugter bei eingeschaltetem ersten Leuchtmittel und / oder zweiten Leuchtmittel, das graphische Element, bevorzugt in der Draufsicht auf die Abdeckung, bevorzugter in der Draufsicht auf den zweiten Bereich der Abdeckung, sichtbar ist.

Bevorzugt ist zwischen der Vorderseite des Lichtleiters und der Rückseite der Abdeckung das flächige Dekorelement und / oder der flächige Diffusor angeordnet. Bevorzugt ist an der Vorderseite des Lichtleiters der flächige Diffusor angeordnet und zwischen dem flächigen Diffusor und der Rückseite der Abdeckung ist das flächige Dekorelement angeordnet. Diese Anordnung bietet den Vorteil, dass das über die Vorderseite des Lichtleiters den Lichtleiter verlassende Licht zuerst in den flächigen Diffusor gelangt und hierdurch vergleichmässigt wird und erst im vergleichmässigten bzw. homogenen Zustand durch das flächige Dekorelement hindurchtritt. Bevorzugt liegt der flächige Diffusor auf der Vorderseite des Lichtleiters auf, so dass bevorzugt zwischen der Vorderseite des Lichtleiters und dem flächigen Diffusor wenigstens bereichsweise eine Gasschicht, insbesondere eine Luftschicht, vorhanden ist. Dies bewirkt den Vorteil, dass das Licht sich besser innerhalb des Lichtleiters fortpflanzen kann, insbesondere falls das Licht über die Seitenfläche und / oder über die Rückseite des Lichtleiters in den Lichtleiter eingekoppelt wird. Das flächige Dekorelement ist bevorzugt zwischen der Rückseite der Abdeckung und dem flächigen Diffusor formschlüssig gehalten. Bevorzugt ist dann zwischen der Rückseite der Abdeckung und dem flächigen Dekorelement und zwischen dem flächigen Dekorelement und dem flächigen Diffusor wenigstens bereichsweise eine Gasschicht, insbesondere eine Luftschicht, angeordnet. Das flächige Dekorelement ist in diesem Fall bevorzugt auf die Abdeckung sowie den Diffusor aufgelegt. Dies bietet den Vorteil, dass das flächige Dekorelement und somit ein durch das flächige Dekorelement gegebenenfalls gebildetes graphisches Element auf einfache Weise ausgetauscht werden kann.

Bevorzugt ist im ersten Innenraumbereich wenigstens ein erster Lichtleiter und / oder im zweiten Innenraumbereich wenigstens ein zweiter Lichtleiter angeordnet. Der erste Lichtleiter weist eine Vorderseite und eine Rückseite auf, wobei die Vorderseite und die Rückseite des ersten Lichtleiters über eine Seitenfläche des ersten Lichtleiters miteinander verbunden sind und wobei die Vorderseite bevorzugt der Rückseite der Abdeckung zugewandt ist. Bevorzugt strahlt das erste Leuchtmittel Licht in die Seitenfläche des ersten Lichtleiters ein. Bevorzugt bildet die Rückseite und / oder die Vorderseite, bevorzugter die Rückseite, des ersten Lichtleiters eine oder mehreren Lichtumlenkstrukturen und / oder die eine oder mehreren Lichtumlenkstrukturen sind im Inneren des ersten Lichtleiters angeordnet. Die eine oder mehreren Lichtumlenkstrukturen dienen bevorzugt dazu, das in die Seitenfläche des ersten Lichtleiters eingestrahlte Licht in die Richtung der Rückseite der Abdeckung, insbesondere in Richtung des ersten Teilbereiches der Rückseite der Abdeckung, umzulenken. Diese Ausführungsform bietet den Vorteil, dass insbesondere die Anzahl an LEDs und / oder an flächigen Leuchtmitteln und / oder an Glühbirnen reduziert und somit die Kosten für die Herstellung der Leuchte gesenkt werden kann, wobei trotzdem eine gute Ausleuchtung durch den ersten Teilbereich der Sichtseite der Abdeckung erzielbar ist. Der zweite Lichtleiter weist eine Vorderseite und eine Rückseite auf, wobei die Vorderseite und die Rückseite des zweiten Lichtleiters über eine Seitenfläche des zweiten Lichtleiters miteinander verbunden sind und wobei die Vorderseite bevorzugt der Rückseite der Abdeckung zugewandt ist. Bevorzugt strahlt das zweite Leuchtmittel Licht in die Seitenfläche des zweiten Lichtleiters ein. Bevorzugt bildet die Rückseite und / oder die Vorderseite, bevorzugter die Rückseite, des zweiten Lichtleiters eine oder mehreren Lichtumlenkstrukturen und / oder die eine oder mehreren Lichtumlenkstrukturen sind im Inneren des zweiten Lichtleiters angeordnet. Die eine oder mehreren Lichtumlenkstrukturen dienen bevorzugt dazu, das in die Seitenfläche des zweiten Lichtleiters eingestrahlte Licht in Richtung der Rückseite der Abdeckung, insbesondere des zweiten Teilbereiches der Rückseite der Abdeckung, umzulenken. Diese Ausführungsform bietet den Vorteil, dass insbesondere die Anzahl an LEDs und / oder an flächigen Leuchtmitteln und / oder an Glühbirnen reduziert und somit die Kosten für die Herstellung der Leuchte gesenkt werden können, wobei trotzdem eine gute Ausleuchtung durch den zweiten Teilbereich der Sichtseite der Abdeckung erzielbar ist.

Bevorzugt weist die Abdeckung wenigstens eine Vertiefung auf, welche bevorzugt von der Sichtseite der Abdeckung begrenzt ist und bevorzugt gegen die die Leuchte umgebende Umgebung offen ausgebildet ist. Zusätzlich oder alternativ kann die Abdeckung auch wenigstens eine Vertiefung aufweisen, welche von der Rückseite der Abdeckung begrenzt ist und bevorzugt gegen den Innenraum der Leuchte offen ausgebildet ist. Bevorzugt weist der erste Bereich der Abdeckung und / oder der zweite Bereich der Abdeckung, bevorzugt der zweite Bereich der Abdeckung, wenigstens eine Vertiefung auf. Bevorzugt ist die Vertiefung des ersten Bereiches vom ersten Teilbereich der Sichtseite begrenzt. Bevorzugt ist die Vertiefung des zweiten Bereiches vom zweiten Teilbereich der Sichtseite begrenzt. In einer solchen Vertiefung ist beispielsweise das flächige Dekorelement und / oder der flächige Diffusor angeordnet. Es können noch weitere Elemente oder andere Elemente als das flächige Dekorelement und / oder der flächige Diffusor in der Vertiefung angeordnet sein. Bevorzugt ist das flächige Dekorelement und / oder der flächige Diffusor mit einem transluzenten oder transparenten Klebstoff und / oder Haftvermittler an der Abdeckung unlösbar befestigt. So ist zum Beispiel das flächige Dekorelement und / oder der flächige Diffusor in dem in der Vertiefung angeordnetem Klebstoff und / oder Haftvermittler eingebettet. In diesem Fall bildet der Klebstoff und / oder der Haftvermittler bevorzugt einen Teilbereich der Sichtseite der Leuchte.

Bei der Befestigung des flächigen Dekorelementes und / oder des flächigen Diffusors durch den Klebstoff und / oder durch den Haftvermittler ist es zum Beispiel auch möglich, dass das in der Vertiefung angeordnete flächige Dekorelement und / oder der in Vertiefung angeordnete flächige Diffusor einen Teilbereich der Sichtseite der Leuchte bildet und dabei bevorzugt eine Vorderseite des flächigen Dekorelementes oder eine Vorderseite des flächigen Diffusors bündig mit der Sichtseite der Abdeckung ist. Bevorzugt ist das flächige Dekorelement und / oder der flächige Diffusor im Wesentlichen korrespondierend zur Vertiefung ausgebildet. Das flächige Dekorelement und / oder der flächige Diffusor ist dadurch im Wesentlichen seitlich genau positioniert. Die Vertiefung und / oder das flächige Dekorelement und / oder der flächige Diffusor können, bevorzugt in der Draufsicht auf die Sichtseite der Abdeckung, insbesondere in der Draufsicht auf die Sichtseite der Leuchte, beispielsweise kreisrund oder vieleckig, insbesondere viereckig, ausgebildet sein. Es sind hier aber auch beliebige andere Formen möglich.

Bevorzugt weist die Leuchte wenigstens eine Platine auf, auf welcher das Leuchtmittel, insbesondere wenigstens eine LED, angeordnet ist. Bevorzugt weist die Platine eine Vorderseite und eine Rückseite auf, wobei bevorzugt die Vorderseite der Platine der Rückseite der Abdeckung zugewandt ist. Bevorzugt ist die Vorderseite der Platine lichtreflektierend ausgebildet. Dies bietet den Vorteil, dass das vom Leuchtmittel ausgestrahlte Licht effizienter in Richtung der Rückseite der Abdeckung gelangt. Bevorzugt weist die Leuchte eine einzige Platine auf. Insbesondere die Verwendung einer einzigen Platine erlaubt eine besonders kostengünstige Herstellung der Leuchte.

Bevorzugt weist die Leuchte wenigstens das erste Leuchtmittel und das zweite Leuchtmittel auf, wobei wenigstens das erste Leuchtmittel und das zweite Leuchtmittel, auf einer einzigen Platine angeordnet sind.

Bevorzugt stützt sich das zweite Lichtschott auf wenigstens einer Platine der Leuchte ab, auf welcher bevorzugt das Leuchtmittel, welches wenigstens eine LED umfasst, angeordnet ist. Bevorzugt weist wenigstens eine Platine der wenigstens einen Platine der Leuchte, auf welcher bevorzugt das Leuchtmittel, welches bevorzugt wenigstens eine LED umfasst, angeordnet ist, wenigstens einen Durchbruch auf, durch welchen sich das zweite Lichtschott hindurcherstreckt, so dass sich das zweite Lichtschott auf der Bodenwandung des Gehäuses der Leuchte abstützen kann. Das zweite Lichtschott ist in diesem Fall bevorzugt mit der Bodenwandung nicht verbunden. Bevorzugt ist das zweite Lichtschott einstückig oder zweistückig mit dem Gehäuse, insbesondere mit der Bodenwandung des Gehäuses, verbunden. Eine wenigstens einen Durchbruch aufweisende Platine kann dann über den Durchbruch auf das zweite Lichtschott aufgesteckt und so sicher positioniert werden. Das zweite Lichtschott ragt dann durch den Durchbruch hindurch.

Bevorzugt ist auf der Sichtseite der Abdeckung, insbesondere direkt auf der Sichtseite der Abdeckung, wenigstens bereichsweise, bevorzugt auf der gesamten Sichtseite der Abdeckung, eine Schutzschicht angeordnet. Die Schutzschicht ist bevorzugt aus transluzentem oder transparentem Material, insbesondere aus transluzentem oder transparentem Kunststoff, hergestellt. Bevorzugt ist der Kunststoff ein Lack, insbesondere Polyurethan oder Polyurea. Lacke sind dem Fachmann bekannt. Bevorzugt wird die Schutzschicht auf die Sichtseite der Abdeckung angespritzt. Besonders bevorzugt wird zuerst die Abdeckung gespritzt und gleichzeitig oder danach, bevorzugt unmittelbar danach, die Schutzschicht an die Abdeckung angespritzt. Bevorzugt wird die Anordnung umfassend die Abdeckung und die Schutzschicht in einem Mehrkomponentenspritzgussverfahren, insbesondere einem Zweikomponentenspritzgussverfahren, hergestellt. Vorteilhaft, um eine effiziente und somit kostengünstige Herstellung der Leuchte zu ermöglichen, werden die Abdeckung und die Schutzschicht in aufeinanderfolgenden oder parallel laufenden Prozessen auf einer Spritzgussmaschine hergestellt. Die Spritzgussmaschine weist hierzu vorteilhaft eine Wendeplatte oder eine Verschiebeplatte auf, um die Abdeckung nach seiner erfolgten Herstellung zu drehen bzw. zu verschieben und in der gedrehten oder verschobenen Position mit einer anderen Formhälfte eine Kavität zur Erzeugung der Schutzschicht zu bilden. Die Abdeckung und die Schutzschicht, allenfalls von unterschiedlichen Bauteilexemplaren, können dann also zyklusweise und zyklusgleich hergestellt werden. Entsprechende Wendeplatten-, Schiebetisch- oder Drehtisch-Schliesseinheiten sind dem Fachmann aus dem Stand der Technik zur Genüge bekannt.

Es wird ausserdem ein Fahrzeug angegeben umfassend die erfindungsgemässe Leuchte, insbesondere Signalleuchte, welche, wie oben dargelegt, ausgebildet ist. Falls die Leuchte des Fahrzeuges als Signalleuchte ausgebildet ist, so ist die Leuchte bevorzugt an einem Heckbereich des Fahrzeuges angeordnet. Bevorzugt ist das Fahrzeug ein Flugzeug oder ein Kraftfahrzeug oder ein schienengebundenes Fahrzeug, bevorzugter ein Kraftfahrzeug.

Die Erfindung gibt zudem ein Verfahren zur Herstellung der erfindungsgemässen Leuchte, insbesondere Signalleuchte, an, welche wie oben angegeben ausgebildet ist, umfassend folgende Schritte:
- Bereitstellung einer Abdeckung, insbesondere einer aus Kunststoff hergestellten Abdeckung, mit einer Sichtseite und einer Rückseite;
- Herstellung einer oder mehreren Lichtumlenkstrukturen, wobei die eine oder mehreren Lichtumlenkstrukturen wenigstens einen Bereich der Sichtseite und / oder der Rückseite der Abdeckung bilden und / oder im Inneren der Abdeckung angeordnet sind.

Bevorzugt werden die eine oder mehreren Lichtumlenkstrukturen, welche wenigstens einen Bereich der Sichtseite und / oder der Rückseite der Abdeckung bilden, mittels Spritzguss und / oder mittels Laser hergestellt. Dies bietet den Vorteil, dass die Leuchte kostengünstig herstellbar ist. Alternativ oder zusätzlich können selbstverständlich die eine oder mehreren Lichtumlenkstrukturen auch mittels Ätzen und / oder Fräsen hergestellt werden.

Bevorzugt werden die eine oder mehreren Lichtumlenkstrukturen im Inneren der Abdeckung mittels Laser hergestellt.

Erfindungsgemäss wird in der Abdeckung wenigstens ein erstes Lichtschott, welches sich bevorzugt von der Rückseite der Abdeckung zur Sichtseite der Abdeckung erstreckt, hergestellt. Bevorzugt wird das erste Lichtschott mittels Laser hergestellt, indem bevorzugt das Material der Abdeckung verändert, wie beispielsweise karbonisiert, wird. Alternativ oder zusätzlich zur Herstellung des ersten Lichtschotts mittels Laser wird in der Abdeckung das wenigstens eine erste Lichtschott bevorzugt gemäss einer der folgenden Varianten 1 oder 2 hergestellt:

### Variante 1:

Bevorzugt wird die Abdeckung aufweisend das erste Lichtschott hergestellt, indem eine Abdeckung umfassend einen ersten Abschnitt und einen das erste Lichtschott bildenden zweiten Abschnitt bereitgestellt wird, wobei bevorzugt die Abdeckung mittels Mehrkomponentenspritzguss, insbesondere Zweikomponentenspritzguss, hergestellt wird, wobei, bevorzugt in einem ersten Schritt, der zweite Abschnitt aus einem lichtundurchlässigen Material, wie beispielsweise einem lichtundurchlässigem Kunststoff oder einem transluzenten oder transparenten Kunststoff, welcher einen lichtundurchlässigen Farbstoff umfasst, hergestellt, insbesondere gespritzt, wird, und, bevorzugt in einem zweiten Schritt, der erste Abschnitt aus einem ersten transluzenten oder transparenten Material, wie beispielsweise transluzentem oder transparentem Kunststoff, hergestellt wird, wobei, bevorzugt im zweiten Schritt, der zweite Abschnitt an den ersten Abschnitt angebracht, insbesondere angespritzt, wird.

### Variante 2:

Bevorzugt wird die Abdeckung aufweisend das erste Lichtschott hergestellt, indem eine Abdeckung umfassend einen ersten Abschnitt und einen das erste Lichtschott bildenden zweiten Abschnitt bereitgestellt wird, wobei bevorzugt die Abdeckung mittels Mehrkomponentenspritzguss, insbesondere Zweikomponentenspritzguss, hergestellt wird, wobei, bevorzugt in einem ersten Schritt, der erste Abschnitt aus einem transluzenten oder transparenten Material, wie beispielsweise transluzentem oder transparentem Kunststoff, hergestellt, insbesondere gespritzt, wird, und der zweite Abschnitt aus einem lichtundurchlässigen Material, wie beispielsweise lichtundurchlässigem Kunststoff oder einem transluzenten oder transparenten Kunststoff, welcher einen lichtundurchlässigen Farbstoff umfasst, hergestellt wird, wobei, bevorzugt im zweiten Schritt, der zweite Abschnitt an den ersten Abschnitt angebracht, insbesondere angespritzt, wird.

Bevorzugt wird an die Abdeckung, insbesondere an die Rückseite der Abdeckung, wenigstens ein zweites Lichtschott angebracht, insbesondere angespritzt, wobei bevorzugt das zweite Lichtschott sich von der Rückseite der Abdeckung wegerstreckt. Bevorzugt ist das zweite Lichtschott aus lichtundurchlässigem Material, insbesondere aus lichtundurchlässigem Kunststoff oder aus einem transluzenten oder transparenten Kunststoff, welcher einen lichtundurchlässigen Farbstoff umfasst, hergestellt, insbesondere gespritzt.

Bevorzugt bildet das Gehäuse das zweite Lichtschott, wobei das zweite Lichtschott einstückig oder zweistückig mit dem Gehäuse verbunden ist. Im Falle der Zweistückigkeit wird das zweite Lichtschott bevorzugt an das Gehäuse angeformt, insbesondere angespritzt.

Erfindungsgemäss schliesst wenigstens ein zweites Lichtschott des wenigstens einen zweiten Lichtschotts unmittelbar an wenigstens ein erstes Lichtschott des wenigstens einen ersten Lichtschotts an. Dies bietet den Vorteil, dass das vom Leuchtmittel ausgestrahlte Licht bis zur Sichtseite der Abdeckung kanalisiert werden kann. Insbesondere kann das vom ersten Leuchtmittel und vom zweiten Leuchtmittel ausgestrahlte Licht wenigstens teilweise, bevorzugt im Wesentlichen vollständig, bevorzugter vollständig, voneinander getrennt zur Sichtseite der Abdeckung geführt werden. Zudem bietet dies den Vorteil, dass die Ausleuchtung der Sichtseite der Abdeckung bzw. der Leuchte durch die eine oder mehreren Lichtumlenkstrukturen besser mit einer Leuchtdichtesimulationssoftware vorausberechenbar ist. Bevorzugt wird das zweite Lichtschott unmittelbar an das erste Lichtschott angeformt, insbesondere angespritzt. Bevorzugt werden die eine oder mehreren Lichtumlenkstrukturen der Abdeckung sowie das erste Lichtschott der Abdeckung mittels Laser hergestellt. Hierdurch kann die Herstellung der Leuchte wesentlich beschleunigt werden.

### KURZE BESCHREIBUNG DER ZEICHNUNGEN

Unterschiedliche Ausführungsformen von Leuchten werden im Folgenden anhand der Zeichnungen beschrieben, die lediglich zur Erläuterung dienen und nicht einschränkend auszulegen sind. In den Zeichnungen zeigen:
- Fig. 1: schematisch einen Querschnitt durch die Leuchte gemäss einer ersten Ausführungsform;
- Fig. 2: schematisch eine Draufsicht auf einen Schnitt entlang der Linie II-II durch die Leuchte gemäss Figur 1;
- Fig. 3: schematisch eine Draufsicht auf die Abdeckung der Leuchte gemäss Figur 1;
- Fig. 4: schematisch einen Querschnitt durch die Leuchte gemäss einer zweiten, erfindungsgemässen Ausführungsform;
- Fig. 5: schematisch einen Querschnitt durch die Leuchte gemäss einer dritten Ausführungsform;
- Fig. 6: schematisch eine Draufsicht auf die Abdeckung der Leuchte gemäss Figur 5;
- Fig. 7: schematisch einen Querschnitt durch die Leuchte gemäss einer vierten Ausführungsform;
- Fig. 8: schematisch einen Querschnitt durch die Leuchte gemäss einer fünften Ausführungsform;
- Fig. 9: schematisch einen Querschnitt durch die Leuchte gemäss einer sechsten Ausführungsform;
- Fig. 10: schematisch eine Draufsicht auf einen Teilbereich der Abdeckung der Leuchte gemäss Fig. 9;
- Fig. 11: schematisch einen Querschnitt durch den Teilbereich der Abdeckung gemäss Fig. 10.

### BESCHREIBUNG BEVORZUGTER AUSFÜHRUNGSFORMEN

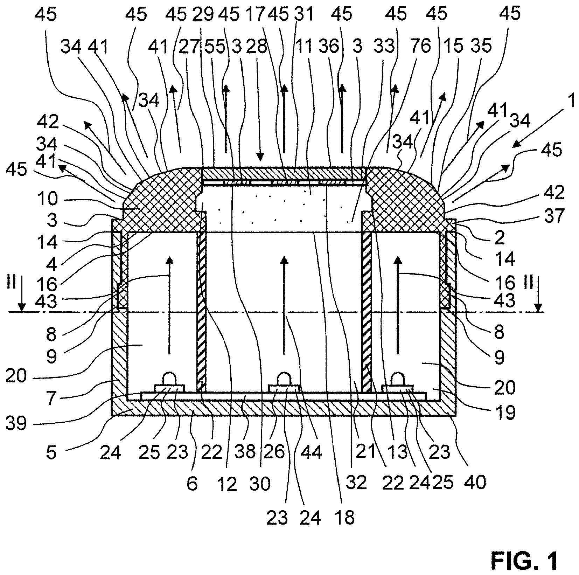

Bei den im Folgenden in den Figuren 1 bis 11 gezeigten Ausführungsformen sind gleiche, ähnliche oder ähnlich wirkende Merkmale jeweils mit den gleichen Bezugszeichen versehen.

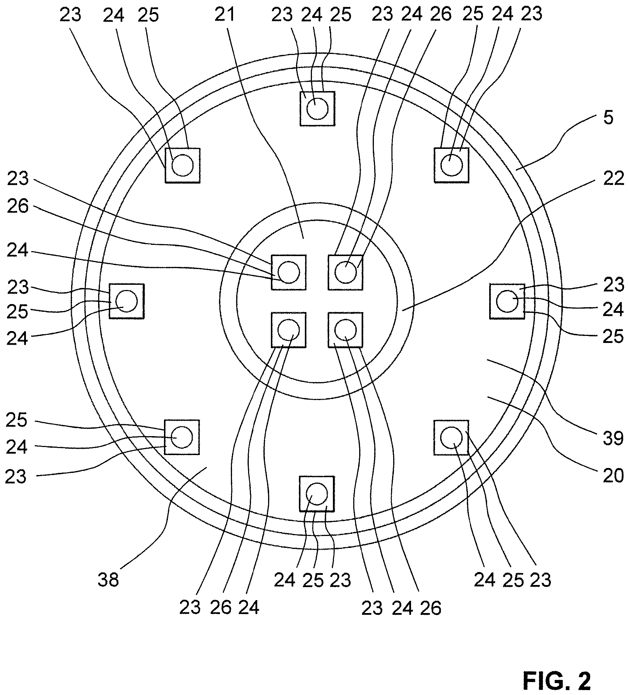

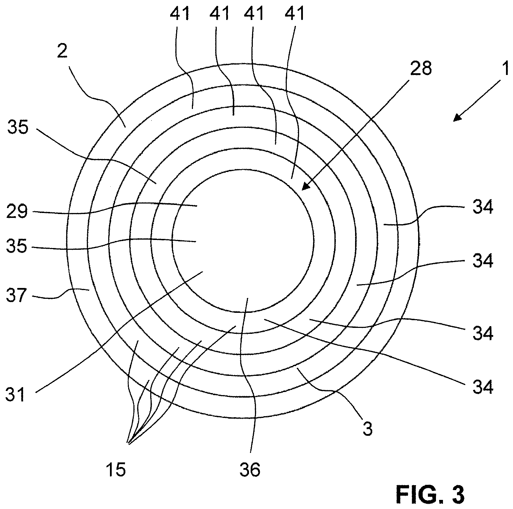

Die Figur 1 zeigt schematisch einen Querschnitt durch die Leuchte gemäss einer ersten Ausführungsform. Die Figur 2 zeigt schematisch eine Draufsicht auf einen Schnitt durch die Leuchte gemäss Figur 1 entlang der Linie II-II. Die Figur 3 zeigt schematisch eine Draufsicht auf die Abdeckung der Leuchte gemäss Figur 1. Die Leuchte 1 gemäss den Figuren 1, 2 und 3 umfasst eine transluzente Abdeckung 2, welche bevorzugt transparent ausgebildet ist, mit einer Sichtseite 3 und einer Rückseite 4. Die Abdeckung 2 weist einen ersten Bereich 10 und einen zweiten Bereich 11 auf. Der erste Bereich 10 und der zweite Bereich 11 der Abdeckung 2 sind jeweils aus einem transluzenten Material, bevorzugt aus einem transparenten Material, wie zum Beispiel Glas oder Kunststoff, bevorzugt Kunststoff, hergestellt. Der erste Bereich 10 ist einstückig ausgebildet und umlaufend um den einstückig ausgebildeten zweiten Bereich 11 ausgebildet und schliesst unmittelbar an den zweiten Bereich 11 an. Der erste Bereich 10 bildet einen ersten Teilbereich 15 der Sichtseite 3 der Abdeckung 2 und einen ersten Teilbereich 16 der Rückseite 4 der Abdeckung 2. Der zweite Bereich 11 bildet einen zweiten Teilbereich 17 der Sichtseite 3 der Abdeckung 2 und einen zweiten Teilbereich 18 der Rückseite 4 der Abdeckung 2. Wie in der Figur 1 ersichtlich, bilden somit der erste Teilbereich 15 des ersten Bereiches 10 sowie der zweite Teilbereich 17 des zweiten Bereiches 11 gemeinsam die gesamte Sichtseite 3 der Abdeckung 2. Der zweite Teilbereich 18 des zweiten Bereiches 11 bildet gemäss Figur 1 gemeinsam mit dem ersten Teilbereich 16 des ersten Bereiches 10 die gesamte Rückseite 4 der Abdeckung 2.

Wie in den Figuren 1, 3 erkennbar, weist die Abdeckung 2, insbesondere der erste Bereich 10, Lichtumlenkstrukturen 34 auf, wobei diese Lichtumlenkstrukturen 34 einen Bereich 42 der Sichtseite 3 der Abdeckung 2 bilden und als relativ zueinander geneigte, plane und umlaufend ausgebildete Oberflächenbereiche 41 der Sichtseite 3 ausgebildet sind. Ein einziger planer Oberflächenbereich 41 bildet somit eine einzige Lichtumlenkstruktur 34.

Die Lichtumlenkstrukturen 34 werden durch das Material der Abdeckung 2 gebildet. Wie in der Figur 3 ersichtlich, ist eine jeweiliger planer Oberflächenbereich 41, insbesondere in der Draufsicht auf die Sichtseite 3 der Abdeckung 2, kreisförmig ausgebildet. Die planen Oberflächenbereiche 41 können auch, insbesondere in der Draufsicht auf die Sichtseite 3 der Abdeckung 2, vieleckig oder irgendwie eine andere Form aufweisen. Der Bereich 42 selbst ist ein Teilbereich des ersten Teilbereiches 15 der Sichtseite 3 der Abdeckung 2. Der Bereich 42, welcher durch die die Lichtumlenkstrukturen 34, bzw. durch die planen Oberflächenbereiche 41, gebildet ist, wird bevorzugt mittels Schleifen und / oder mittels Laser und / oder mittels Spritzguss hergestellt. Die Lichtumlenkstrukturen 34 sind insbesondere dazu ausgebildet, Licht gezielt in eine oder mehrere bestimmte Richtungen oder in einen oder mehrere bestimmte Richtungsbereiche umzulenken wie dies beispielhaft mit den Pfeilen 45 in der Figur 1 angedeutet ist. Durch die Lichtumlenkstrukturen 34 kann somit Licht gezielt von der Sichtseite 3 der Abdeckung 2 abgestrahlt und daher die Sichtseite 3 gezielt ausgeleuchtet werden. Alternativ oder zusätzlich können die Lichtumlenkstrukturen 34 wenigstens einen Teilbereich der Rückseite 4 der Abdeckung 2 bilden (nicht dargestellt).

Der erste Bereich 10 bildet gemeinsam mit dem zweiten Bereich 11 eine von der Sichtseite 3 der Abdeckung 2 begrenzte Vertiefung 27, welche gegen die Umgebung der Leuchte 1 offen ausgebildet ist. Die Abdeckung 2 kann auch mehrere solcher Vertiefungen 27 aufweisen. In dieser Vertiefung 27 ist auf dem zweiten Teilbereich 17 der Sichtseite 3 ein flächiges Dekorelement 28 mit einer Vorderseite 29 und einer Rückseite 30 angeordnet. Wie in der Figur 3 erkennbar, ist das flächige Dekorelement 28, insbesondere in der Draufsicht auf die Sichtseite 3 der Abdeckung 2, kreisförmig ausgebildet. Das flächige Dekorelement 28, insbesondere in der Draufsicht auf die Sichtseite 3 der Abdeckung 2, kann beispielsweise auch vieleckig sein oder eine andere beliebige Form aufweisen. Die Vorderseite 29 des flächigen Dekorelementes 28 ist insgesamt plan ausgebildet. Wie in den Figuren 1, 3 ersichtlich, bildet der erste Teilbereich 15 der Sichtseite 3 gemeinsam mit der Vorderseite 29 des flächigen Dekorelementes 28 die Sichtseite 35 der Leuchte 1. Das flächige Dekorelement 28 kann zum Beispiel in die Vertiefung 27 eingelegt und somit einfach austauschbar sein. Alternativ dazu kann das flächige Dekorelement 28 beispielsweise mit einem nicht dargestellten transluzenten, insbesondere transparenten, Klebstoff an der Sichtseite 3 der Abdeckung 2 unlösbar befestigt sein oder sogar im in der Vertiefung 27 angeordneten transluzenten, insbesondere transparenten, Klebstoff eingebettet und somit unlösbar an der Sichtseite 3 der Abdeckung 2 befestigt sein. Beliebige andere Befestigungsarten sind auch möglich. Das flächige Dekorelement 28 umfasst eine transluzente, insbesondere transparente, bedruckte Dekorfolie 31, wobei die bevorzugt lichtundurchlässige Bedruckung 32 an einer Rückseite 33 der Dekorfolie 31 angeordnet ist. Die Bedruckung 32 bildet ein graphisches Element, welches beispielsweise ein Symbol, ein Ornament, ein Buchstabe, ein Schriftzug oder ein Logo umfasst. Die Dekorfolie 31 kann alternativ auch an einer Vorderseite 36 oder an der Vorderseite 36 sowie gleichzeitig an der Rückseite 33 die Bedruckung 32 aufweisen. Das flächige Dekorelement 28 füllt, wie in der Figur 1 erkennbar, im Wesentlichen vollständig die Vertiefung 27 aus und die Vorderseite 29 des flächigen Dekorelementes 28 ist bevorzugt bündig mit dem ersten Teilbereich 15 der Sichtseite 3. Dies bietet den Vorteil, dass weniger Verschmutzungen in die Vertiefung 27 gelangen können.

Der zweite Bereich 11 weist ein einziges, umlaufend ausgebildetes, seitlich vorspringendes Rastelement 12 auf, welches in eine einzige, umlaufend ausgebildete Vertiefung 13 des ersten Bereiches 10 eingreift, so dass der zweite Bereich 11 lösbar am ersten Bereich 10 befestigt ist. Dies bietet den Vorteil, dass der zweite Bereich 11, beispielsweise für Reparationszwecke, einfach ausgetauscht werden kann. Anstelle eines einzigen Rastelementes 12 kann der zweite Bereich 11 auch zwei oder mehr als zwei Rastelemente 12 aufweisen, welche bevorzugt voneinander beabstandet sind. Der zweite Bereich 11 kann aber auch unlösbar, beispielsweise mit einem Klebstoff, welcher lichtdurchlässig oder lichtundurchlässig, bevorzugt lichtundurchlässig, ausgebildet ist, am ersten Bereich 10 befestigt sein. Dies bietet den Vorteil, dass der zweite Bereich 11 dicht, insbesondere flüssigkeitsdicht, mit dem ersten Bereich 10 verbunden ist.

Die Leuchte 1 weist ein Gehäuse 5 auf, welches eine Bodenwandung 6 und eine Seitenwandung 7 umfasst. Das Gehäuse 5, insbesondere die Bodenwandung 6 und / oder die Seitenwandung 7, ist bevorzugt aus Kunststoff und vorzugweise im Spritzguss hergestellt. Die Bodenwandung 6 ist bevorzugt, wie in der Figur 1 dargestellt, mit der Seitenwandung 7 einstückig verbunden. Die Herstellung des Gehäuses 5 wenigstens bereichsweise mit Kunststoff, die Herstellung des Gehäuses 5, insbesondere der Bodenwandung 6 und / oder der Seitenwandung 7 durch Spritzguss, oder die Einstückigkeit der Bodenwandung 6 und der Seitenwandung 7, bieten jeweils den Vorteil, dass das Leuchte 1 kostengünstig hergestellt werden kann. Eine umlaufend ausgebildete Nase 37 der Abdeckung 2 liegt auf einer umlaufenden Stirnseite 14 der Seitenwandung 7 auf. Die Abdeckung 2 umfasst zwei voneinander beabstandete Rastzungen 8. Diese zwei Rastzungen 8 greifen jeweils in eine jeweilige Vertiefung 9 in der Seitenwandung 7 ein, so dass die Abdeckung 2 lösbar am Gehäuse 5 befestigt ist. Dies bietet den Vorteil, dass die Abdeckung 2, beispielsweise für Reparationszwecke, einfach ausgetauscht werden kann. Anstatt der zwei Rastzungen 8 kann auch nur eine einzige Rastzunge 8 vorhanden sein, welche bevorzugt umlaufend um den zweiten Bereich 11 ausgebildet ist. Anstelle der zwei Rastzungen 8 ist es auch möglich, dass mehr als zwei Rastzungen 8 vorhanden sind, welche bevorzugt voneinander beabstandet sind und welche bevorzugt umlaufend um den zweiten Bereich 11 angeordnet sind. Die Rastzunge 8 bzw. die Rastzungen 8 sind bevorzugt, wie in der Figur 1 dargestellt, einstückig mit der Abdeckung 2 verbunden. Dies bietet den Vorteil, dass die Leuchte kostengünstig herstellbar ist. Selbstverständlich kann die Abdeckung 2 auch unlösbar, wie beispielsweise mit einem Klebstoff (nicht dargestellt), welcher bevorzugt lichtundurchlässig ausgebildet ist, am Gehäuse 5 befestigt sein. Die Befestigung mittels Klebstoff bietet den Vorteil, dass die Abdeckung 2 dicht, insbesondere flüssigkeitsdicht, mit dem Gehäuse 5 verbunden ist. Falls der Klebstoff zudem noch lichtundurchlässig ist, so die Verbindung zwischen dem Gehäuse 5 und der Abdeckung 2 noch lichtdicht.

Die Abdeckung 2 und das Gehäuse 5 begrenzen gemeinsam einen Innenraum 19, welcher zum Beispiel ein Gas, wie beispielweise Luft, enthält. Der Innenraum 19 weist einen ersten Innenraumbereich 20 und einen zweiten Innenraumbereich 21 auf. Der ersten Innenraumbereich 20 ist umlaufend um den zweiten Innenraumbereich 21 ausgebildet und teilweise durch ein umlaufend ausgebildetes, zweites Lichtschott 22 vom zweiten Innenraumbereich 21 getrennt. Gemäss der Figur 2 ist das zweite Lichtschott 22 kreisförmig ausgebildet, kann aber auch, insbesondere in der Draufsicht gesehen, eine beliebige andere Form aufweisen.

Die Leuchte 1 weist zudem ein Leuchtmittel 23 auf. Das Leuchtmittel 23 der Leuchte 1 umfasst, wie in den Figuren 1, 2 ersichtlich, eine Vielzahl an LEDs 24. Die gemäss der Figur 2 im ersten Innenraumbereich 20 angeordneten acht LEDs 24 bilden gemeinsam erste Leuchtmittel 25 und die im zweiten Innenraumbereich 21 angeordneten vier LEDs 24 bilden gemeinsam zweite Leuchtmittel 26. Alternativ zu einer LED 24 kann beispielsweise auch ein flächiges Leuchtmittel, wie zum Beispiel eine Leuchtfolie, wie beispielsweise eine OLED oder eine Elektrolumineszenzfolie, als Leuchtmittel 23 eingesetzt werden (nicht dargestellt).

Die LEDs 24 des ersten Leuchtmittels 25 sind, wie in der Figur 2 erkennbar, in einer Kreisform angeordnet. Die LEDs 24 des zweiten Leuchtmittels 26 sind in einer viereckigen Form angeordnet. Die LEDs 24 des ersten Leuchtmittels 25 sowie die LEDs 24 des zweiten Leuchtmittels 26 können jeweils, insbesondere in der Draufsicht, in einer beliebig anderen Form angeordnet sein. Sämtliche LEDs 24 sind, wie in den Figuren 1 und 2 dargestellt, auf einer einzigen im Innenraum 19 angeordneten kreisförmigen Platine 38 mit einer Vorderseite 39 und einer Rückseite 40 angeordnet. Die Rückseite 40 der Platine 38 liegt auf der Bodenwandung 6 auf. Die Verwendung der LEDs 24 als Leuchtmittel, aber auch die Anordnung sämtlicher LEDs 24 auf einer einzigen Platine 38, bietet den Vorteil, dass die Leuchte 1 kostengünstig herstellbar ist.

Die LEDs 24 des ersten Leuchtmittels 25, welches im ersten Innenraumbereich 20 angeordnet ist, strahlen Licht gemäss dem Pfeilen 43 direkt auf den ersten Teilbereich 16 der Rückseite 4 der Abdeckung 2. Die LEDs 24 des zweiten Leuchtmittels 26, welches im zweiten Innenraumbereich 21 angeordnet sind, strahlen Licht gemäss dem Pfeil 44 direkt auf den zweiten Teilbereich 18 der Rückseite 4 der Abdeckung 2. Die direkte Anstrahlung bietet den Vorteil, dass das vom ersten Leuchtmittel 25 sowie das vom zweiten Leuchtmittel 26 ausgestrahlte Licht ohne Verlust an die Rückseite 3 der Abdeckung 2 gelangt.

Wie in der Figur 1 ersichtlich, ist das zweite Lichtschott 22 an der Abdeckung 2 befestigt und erstreckt sich in die Richtung der Bodenwandung 6 und ist auf der Vorderseite 39 der Platine 38 abgestützt. Das zweite Lichtschott 22 ist bevorzugt an die Abdeckung 2 angespritzt. Die in der Figur 1 dargestellte Anordnung umfassend die Abdeckung 2 und das zweite Lichtschott 22 ist zweistückig ausgebildet und bevorzugt im Zweikomponentenspritzgussverfahren hergestellt. Die genannte Anordnung kann aber auch einstückig ausgebildet sein. Die einstückige Anordnung, welche vorzugweise im Spritzguss hergestellt ist, ist bevorzugt, da diese eine kostengünstige Herstellung der Leuchte 1 erlaubt. Zudem ist das zweite Lichtschott 22 bevorzugt aus einem lichtundurchlässigen Material, bevorzugt aus einem lichtundurchlässigen Kunststoff, hergestellt. Die Erstreckung des zweiten Lichtschotts 22 in den Innenraum 19 sowie dessen lichtundurchlässige Ausbildung bieten den Vorteil, dass das vom ersten Leuchtmittel 25 und vom zweiten Leuchtmittel 26 abgestrahlte Licht jeweils kanalisiert wird, so dass Licht vom ersten Innenraumbereich 20 nicht in den zweiten Innenraumbereich 21 gelangen kann und Licht vom zweiten Innenraumbereich 21 nicht in den ersten Innenraumbereich 20 gelangen kann. Dies bietet zudem den Vorteil, dass der erste Teilbereich 15 der Sichtseite 3 sowie der zweite Teilbereich 17 der Sichtseite 3 gezielter ausgeleuchtet werden können. Des Weiteren kann auch der erste Teilbereich 15 der Sichtseite 3 relativ zum zweiten Teilbereich 17 der Sichtseite 3 oder der zweite Teilbereich 17 der Sichtseite 3 relativ zum ersten Teilbereich 15 der Sichtseite 3, gezielter ausgeleuchtet werden.

Somit gelangt das vom ersten Leuchtmittel 25 ausgestrahlte Licht in den ersten Innenraumbereich 20 und danach in den ersten Bereich 10 der Abdeckung 2. Das Licht pflanzt sich im ersten Bereich 10 fort und wird durch die Lichtumlenkstrukturen 34, welche als plane, zueinander geneigte Oberflächenbereiche 41 der Sichtseite 3 ausgebildet sind, gezielt in eine oder mehrere bestimmte Richtungen oder gezielt in einen oder mehrere bestimmte Richtungsbereiche umgelenkt und somit die Sichtseite 3, insbesondere der Teilbereich 15 der Sichtseite 3, der Abdeckung 2, gezielt ausgeleuchtet. Diese gezielte Ausleuchtung der Sichtseite 3 der Abdeckung 2 ist insbesondere dann notwendig, falls die Leuchte 1 gesetzliche Vorschriften, insbesondere betreffend die Ausleuchtung der Umgebung der Leuchte 1, bzw. des Fahrzeuges, an welchem die Leuchte 1 angeordnet ist, erfüllen muss. Die Lichtumlenkstrukturen 34, welche als plane relativ, zueinander geneigte Oberflächenbereiche 41 der Sichtseite 3 ausgebildet sind, bieten zudem den Vorteil, dass die ersten Leuchtmittel 25 aufgrund dieser Lichtumlenkstrukturen 34, insbesondere in der Draufsicht auf die Sichtseite 3 der Abdeckung 2, und insbesondere in der Draufsicht auf den Bereich 42 der Sichtseite 3 der Abdeckung 2, welcher durch die Lichtumlenkstrukturen 34 gebildet ist, nicht mehr sichtbar sind. Diese Ausgestaltung der Lichtumlenkstrukturen 34 führt zudem dazu, dass der Bereich 42 der Sichtseite 3 eine brillante Erscheinungsform aufweist. Wie insbesondere in der Figur 1 ersichtlich, ist der Bereich 42 der Sichtseite 3 insgesamt gekrümmt ausgebildet. Dies bietet den Vorteil, dass der Brillanteffekt des Bereiches 42 weiter verstärkt wird.

Das vom zweiten Leuchtmittel 26 ausgestrahlte Licht gelangt in den zweiten Innenraumbereich 21 und danach in den zweiten Bereich 11 der Abdeckung 2, welcher als Diffusor ausgebildet ist. Um die Diffusorfunktion zu erzielen, weist der zweite Bereich 11 beispielsweise Partikel 76 oder mit einem Laser hergestellte Strukturen (nicht dargestellt) auf. Somit wird das vom zweiten Innenraumbereich 21 herkommende Licht im als Diffusor ausgebildeten zweiten Bereich 11 der Abdeckung 2 vergleichmässigt, bevor dieses in das flächige Dekorelement 28 eintritt. Nach dem Durchtritt durch das flächige Dekorelement 28 und gegebenenfalls einem transluzenten oder transparenten Klebstoff, mit welchem das flächige Dekorelement 28 an der Sichtseite 3 der Abdeckung 2 befestigt ist, verlässt das Licht die Leuchte 1 über die Vorderseite 29 des flächigen Dekorelementes 28.

Falls das zweite Leuchtmittel 26 Licht aussendet, so ist ein durch die Bedruckung 32 gebildetes graphisches Element 55 an der Sichtseite 3 der Abdeckung 2, insbesondere an der Sichtseite 35 der Leuchte 1, sichtbar. Falls das zweite Leuchtmittel 26 kein Licht aussendet, so ist das durch die Bedruckung 32 gebildete graphische Element 55 an der Sichtseite 3 der Abdeckung 2, insbesondere an der Sichtseite 35 der Leuchte 1, nicht sichtbar. In diesem Fall, weist das flächige Dekorelement 28 ein Tag / Nacht-Design auf, wie dies in der Figur 3 dargestellt ist. Alternativ kann selbstverständlich das flächige Dekorelement 28 auch derart ausgebildet sein, dass das durch die Bedruckung 32 gebildete graphische Element 55 an der Sichtseite 3 der Abdeckung 2, insbesondere an der Sichtseite 35 der Leuchte 1, stets sichtbar ist. Das flächige Dekorelement 28 ist somit sichtbar, falls das zweite Leuchtmittel 26 Licht aussendet oder kein Licht aussendet. Diese Ausführungsform ist insbesondere dann bevorzugt, falls die Leuchte 1 als Signalleuchte ausgebildet ist. Die Signalleuchte wirkt somit stets dekorativ und die Signalfunktion wird durch die Signalleuchte nur bei Bedarf ausgeübt.

Bevorzugt ist das zweite Lichtschott 22 aus einem lichtreflektierenden Material, bevorzugt aus einem lichtreflektierenden Kunststoff, hergestellt und / oder auf das zweite Lichtschott 22 ist wenigstens bereichsweise eine lichtreflektierende Beschichtung aufgetragen (nicht dargestellt). Alternativ oder zusätzlich ist bevorzugt die Vorderseite 39 der Platine 38 lichtreflektierend ausgebildet. Die lichtreflektierende Ausbildung des zweiten Lichtschotts 22 und / oder der Platine 38 bietet den Vorteil, dass das von den im Innenraum 19 angeordneten ersten Leuchtmittel 25 und zweiten Leuchtmittel 26 ausgestrahlte Licht effizienter zur Rückseite 4 der Abdeckung 2 geleitet werden kann. Alternativ oder zusätzlich ist zudem das Gehäuse 5, insbesondere die Bodenwandung 6 und / oder die Seitenwandung 7, aus einem lichtreflektierenden Material, insbesondere aus Kunststoff oder Metall, bevorzugt aus Kunststoff, hergestellt und / oder auf das Gehäuse 5, insbesondere auf die Bodenwandung 6 und / oder auf die Seitenwandung 7, ist wenigstens bereichsweise eine lichtreflektierende Beschichtung aufgetragen (nicht dargestellt). Dies bietet den Vorteil, dass das von den im Innenraum 19 angeordneten ersten Leuchtmittel 25 ausgestrahlte Licht effizienter zur Rückseite 4 der Abdeckung 2 geleitet werden kann.

Bevorzugt ist die Leuchte 1 gemäss den Figuren 1, 2 und 3 als Signalleuchte ausgebildet. Die Leuchte 1 gemäss den Figuren 1, 2 und 3 hat somit eine Signalfunktion sowie eine Dekorfunktion. Dies bedeutet, dass die Leuchte 1 eine Signalfunktion ausüben kann und beispielsweise als ein Rücklicht, ein Bremslicht, ein zusätzliches Bremslicht, ein Nebelrücklicht, ein zusätzliches Nebelrücklicht, ein Blinker, ein seitlicher Blinker, oder ein Scheinwerfer, insbesondere ein Rückfahrscheinwerfer, ausgebildet ist. Im Fall, dass die Leuchte 1 als Signalleuchte 1 ausgebildet ist, übt der zweite Bereich 11, auf welchem das flächige Dekorelement 28 angeordnet ist, die Dekorfunktion aus, und der erste Bereich 10 übt die Signalfunktion, wie beispielsweise die Scheinwerferfunktion, aus. Hierzu ist zum Beispiel das erste Leuchtmittel 25, im Vergleich zum zweiten Leuchtmittel 26, derart ausgebildet und gesteuert, dass dieses im Betrieb Licht mit einer grösseren Leuchtstärke ausstrahlen kann als das zweite Leuchtmittel 26. Bevorzugt sind zudem das erste Leuchtmittel 25 und das zweite Leuchtmittel 26 unabhängig voneinander steuerbar.

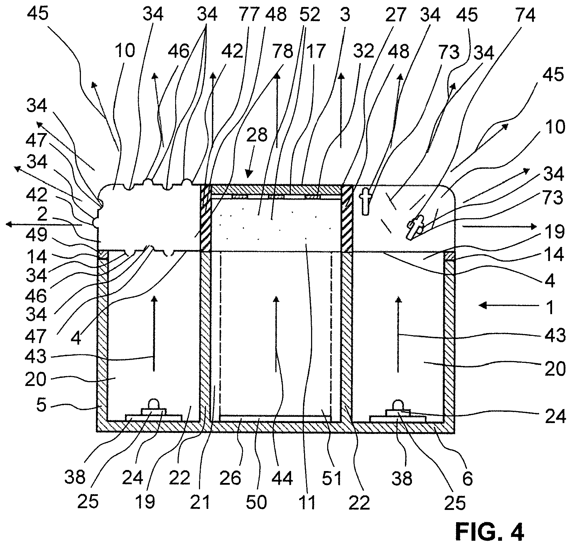

Die Figur 4 zeigt schematisch einen Querschnitt durch die erfindungsgemässe Leuchte gemäss einer zweiten Ausführungsform. Die erfindungsgemässe Leuchte 1 gemäss der Figur 4 umfasst eine Abdeckung 2 sowie ein Gehäuse 5. Die Abdeckung 2 ist insgesamt einstückig ausgebildet. Die Abdeckung 2 ist aus einem transluzenten Material, bevorzugt aus einem transparenten Material, wie beispielsweise Glas oder Kunststoff, bevorzugt Kunststoff, vorzugweise im Spritzguss, hergestellt. Die Herstellung der Abdeckung 2 aus Kunststoff und insbesondere im Spritzguss bietet den Vorteil, dass die Leuchte 1 kostengünstig herstellbar ist. Die Abdeckung 2 ist mittels eines auf einer Stirnseite 14 des Gehäuses 5 angeordneten Klebstoffes 49, welcher bevorzugt lichtundurchlässig ausgebildet ist, am Gehäuse 5 unlösbar befestigt.

Wie in der Figur 4 ersichtlich, bilden mehrere Lichtumlenkstrukturen 34 wenigstens einen Bereich 42 der Sichtseite 3 der Abdeckung 2, insbesondere wenigstens einen Bereich 42 der Sichtseite 3, welcher durch den ersten Bereich 10 der Abdeckung 2 gebildet ist. Die Lichtumlenkstrukturen 34 sind somit an der Sichtseite 3 der Abdeckung 2 angeordnet. Diese Lichtumlenkstrukturen 34 sind, wie in der Figur 4 erkennbar, als Erhebungen 46 sowie als Vertiefungen 47 ausgebildet und durch das Material der Abdeckung 2 gebildet, welches bevorzugt Kunststoff ist. Lichtumlenkstrukturen in der Form von Vertiefungen und / oder Erhebungen, welche den Bereich 42 der Sichtseite 3 bilden können, sind beispielhaft in der Veröffentlichungsschrift EP 2 853 806 A1 beschrieben. Wie mit gestrichelten Linien angedeutet, kann, alternativ oder zusätzlich, die Rückseite 4 der Abdeckung 2 Lichtumlenkstrukturen 34 aufweisen, welche als Erhebung 46 und / oder als Vertiefung 47 ausgebildet sind. Diese Erhebungen 46 und Vertiefungen 47 sind ebenfalls durch das Material der Abdeckung 2 gebildet. Die Erhebungen 46 und / oder die Vertiefungen 47 der Abdeckung 2 werden bevorzugt im Spritzguss hergestellt. Alternativ oder zusätzlich können die Erhebungen 46 und / oder die Vertiefungen 47 beispielsweise auch mittels Laser, Ätzen oder Fräsen hergestellt werden.

Zusätzlich zu den als Erhebungen 46 sowie Vertiefungen 47 ausgebildeten Lichtumlenkstrukturen 34 weist die Abdeckung 2 noch Lichtumlenkstrukturen 34 auf, welche innerhalb der Abdeckung 2, insbesondere innerhalb des Bereiches 10 der Abdeckung 2, angeordnet sind und somit vor Umwelteinflüssen geschützt sind. Diese innerhalb der Abdeckung 2 angeordneten Lichtumlenkstrukturen 34 werden bevorzugt mittels Laser hergestellt. Eine solche Lichtumlenkstruktur 34, wie beispielhaft in der Figur 4 dargestellt, umfasst bevorzugt einen langgestreckten, insbesondere im Wesentlichen rotationssymmetrischen, Grundkörper 73 mit optional einer oder mehreren daran angebrachten Elementen in Form von Fahnen 74. Beispiele von Lichtumlenkstrukturen, welche im Inneren der Abdeckung 2 angeordnet sein können, sind in der Veröffentlichungsschrift WO 2017/174548 A1 dargestellt.

Falls die Lichtumlenkstrukturen 34 im Inneren der Abdeckung 2 mittels Laser hergestellt werden, so werden bevorzugt die Lichtumlenkstrukturen 34 durch eine lokale Materialveränderung, insbesondere durch eine Aufschmelzung des Materials, der Abdeckung 2 hergestellt. Das Material der Abdeckung 2, insbesondere im Inneren der Abdeckung 2, wird zur Herstellung der Lichtumlenkstrukturen 34 also vorzugsweise an den entsprechenden Stellen mittels Wärmeeinwirkung aufgeschmolzen und wieder abgekühlt. Es wird dadurch an den jeweiligen Stellen eine lokale Strukturveränderung des Abdeckungsmaterials bewirkt, wodurch die Lichtumlenkstrukturen 34 gebildet werden. Das Material der Abdeckung 2 wird vorzugsweise bei der Herstellung der Lichtumlenkstrukturen 34 aber nicht karbonisiert.

Die Abdeckung 2 umfasst ein erstes Lichtschott 48. Dieses erste Lichtschott 48 erstreckt sich von der Rückseite 4 zur Sichtseite 3 der Abdeckung 2 und trennt im Falle der Leuchte 1 gemäss Figur 4 vollständig den ersten Bereich 10 der Abdeckung 2 und einen zweiten Bereich 11 der Abdeckung 2 optisch voneinander. Somit kann im ersten Bereich 10 sich fortpflanzendes Licht nicht in den zweiten Bereich 11 übertreten und im zweiten Bereich 11 sich fortpflanzendes Licht kann nicht in den ersten Bereich 10 übertreten. Das erste Lichtschott 48 ist gemäss einer ersten bevorzugten Ausführungsform mittels Laser hergestellt, indem das transluzente, insbesondere transparente, Material der Abdeckung 2 beispielsweise mittels Laser karbonisiert wird und somit ein das erste Lichtschott 48 bildender lichtundurchlässiger, zweiter Abschnitt 77 der Abdeckung 2 gebildet. Nach einer zweiten bevorzugten Ausführungsform wird die Abdeckung 2 insgesamt, und somit auch das erste Lichtschott 48 mittels Spritzguss, insbesondere mittels Zweikomponentenspritzguss, hergestellt. Gemäss einer ersten Variante wird hierbei in einem ersten Schritt der zweite Abschnitt 77 der Abdeckung 2, welcher das erste Lichtschott 48 bildet, aus einem bevorzugt lichtundurchlässigen Material, insbesondere aus einem lichtundurchlässigen Kunststoff, gespritzt, und danach in einem zweiten Schritt ein verbleibender Abschnitt der Abdeckung 2, d.h. ein erster Abschnitt 78 der Abdeckung 2, mit transluzentem Material, bevorzugt mit transparentem Material, wie insbesondere Kunststoff, hergestellt, indem das transluzente, insbesondere transparente, Material an das erste Lichtschott 48, d.h. an den zweiten Abschnitt 77 der Abdeckung 2, angespritzt wird.

Alternativ wird gemäss einer zweiten Variante in einem ersten Schritt der erste Abschnitt 78 der Abdeckung 2, d.h. der transluzente Abschnitt 78, insbesondere der transparente Abschnitt 78, der Abdeckung 2 mit einem Material, welches bevorzugt Kunststoff ist, hergestellt, insbesondere gespritzt, und anschliessend, in einem zweiten Schritt, der das erste Lichtschott 48 bildende zweite Abschnitt 77 der Abdeckung 2 hergestellt, indem an den bereits hergestellten transluzenten, insbesondere transparenten, ersten Abschnitt 78 der Abdeckung 2 ein lichtundurchlässiges Material, insbesondere ein lichtundurchlässiger Kunststoff, angespritzt wird. Der zweite Bereich 11 ist als Diffusor ausgebildet, wobei die Diffusorstrukturen 52, welche die Diffusorfunktion ausüben, bevorzugt mittels Laser hergestellt sind. Bei der Leuchte 1 gemäss der Figur 4 können somit sämtliche Lichtumlenkstrukturen 34, die Diffusorstrukturen 52 als auch das erste Lichtschott 48 mittels Laser hergestellt werden. Dies ermöglicht eine besonderes effiziente und kostengünstige Herstellung der Leuchte 1.

Die Leuchte 1 gemäss Figur 4 umfasst zudem ein zweites Lichtschott 22, welches sich in einen durch die Abdeckung 2, den Klebstoff 49 sowie das Gehäuse 5 begrenzten Innenraum 19 erstreckt. Das zweite Lichtschott 22 ist aus einem lichtundurchlässigen Material, insbesondere aus einem lichtundurchlässigen Kunststoff, hergestellt. Bevorzugt ist das zweite Lichtschott 22, wie in der Figur 4 dargestellt, einstückig mit dem bevorzugt lichtundurchlässigen Gehäuse 5, insbesondere mit einer Bodenwandung 6 des lichtundurchlässigen Gehäuses 5, verbunden und schliesst bevorzugt unmittelbar an das erste Lichtschott 48 an. Die Anordnung umfassend das Gehäuse 5 und das zweite Lichtschott 22 ist bevorzugt mittels Spritzguss hergestellt. Im vorliegenden Fall liegt das zweite Lichtschott 22 bevorzugt auf dem ersten Lichtschott 48 auf und ist somit mit dem ersten Lichtschott 48 nicht verbunden. Das zweite Lichtschott 22 unterteilt den Innenraum 19 in einen ersten Innenraumbereich 20, welcher umlaufend um einen mittigen Innenraumbereich 21 ausgebildet ist.

Im ersten Innenraumbereich 20 ist ein erstes Leuchtmittel 25 angeordnet umfassend eine Vielzahl von LEDs 24, welche auf einer einzigen Platine 38 angeordnet sind. Im zweiten Innenraumbereich 21 ist ein zweites Leuchtmittel 26 angeordnet, welches als flächiges Leuchtmittel 50, wie beispielsweise eine Elektrolumineszenzfolie ausgebildet ist. Optional ist im zweiten Innenraumbereich 21 ein Lichtleiter 51, welcher beispielhaft und mit gestrichelten Linien dargestellt ist, angeordnet. Der Lichtleiter 51 ist bevorzugt aus Kunststoff hergestellt. Der Lichtleiter 51 ist zum Beispiel einstückig oder zweistückig mit dem als Diffusor ausgebildeten zweiten Bereich 11 verbunden. Der Lichtleiter 51 stützt sich, wie in der Figur 4 dargestellt, bevorzugt auf dem flächigen Leuchtelement 50 ab, so dass das vom flächigen Leuchtmittel 50 abgestrahlte Licht unmittelbar in den Lichtleiter 51 gelangen kann und somit Lichtverluste reduziert werden können. Das in den Lichtleiter 51 eingetretene Licht tritt gemäss dem Pfeil 44 durch den Lichtleiter 51 hindurch, gelangt danach unmittelbar in den als Diffusor ausgebildeten zweiten Bereich 11 und verlässt sodann die Leuchte 1 über ein flächiges Dekorelement 28, welches in einer Vertiefung 27 angeordnet ist, die vom ersten Lichtschott 48 und einem zweiten Teilbereich 17 der Sichtseite 3, welcher durch zweiten Bereich 11 gebildet ist, begrenzt ist.

Das von den LEDs 24 des ersten Leuchtmittels 25 abgestrahlte Licht tritt gemäss den Pfeilen 43 durch den ersten Innenraumbereich 20 hindurch, gelangt in den ersten Bereich 10 der Abdeckung 2 und wird nach dem Auftreffen auf die als Erhebungen 46 und Vertiefungen 47 ausgebildeten Lichtumlenkstrukturen 34 des ersten Bereiches 10 sowie den im Inneren des ersten Bereiches 10 angeordneten Lichtumlenkstrukturen 34 gezielt, wie mit den Pfeilen 45 schematisch und beispielhaft gezeigt, von der Sichtseite 3 der Abdeckung 2 abgestrahlt.

Aufgrund des zweiten Lichtschotts 22 und des ersten Lichtschotts 48, welche unmittelbar aneinander anschliessen, sowie dem ersten Lichtschott 22, welches einstückig mit der Bodenwandung 6 des insgesamt lichtundurchlässigen Gehäuses 5 verbunden ist, und dem lichtundurchlässigen Klebstoff 49, wird das vom ersten Leuchtmittel 25 ausgestrahlte Licht kanalisiert und gelangt ohne Verlust zur Sichtseite 3 der Abdeckung 2. Ebenso gelangt das vom zweiten Leuchtmittel 26 abgestrahlte Licht, aufgrund des einstückig mit der Bodenwandung 6 verbundenen zweiten Lichtschotts 22 sowie des unmittelbar an das zweite Lichtschott 22 angrenzende erste Lichtschott 48, ohne Verlust, zur Sichtseite 3 der Abdeckung 2.

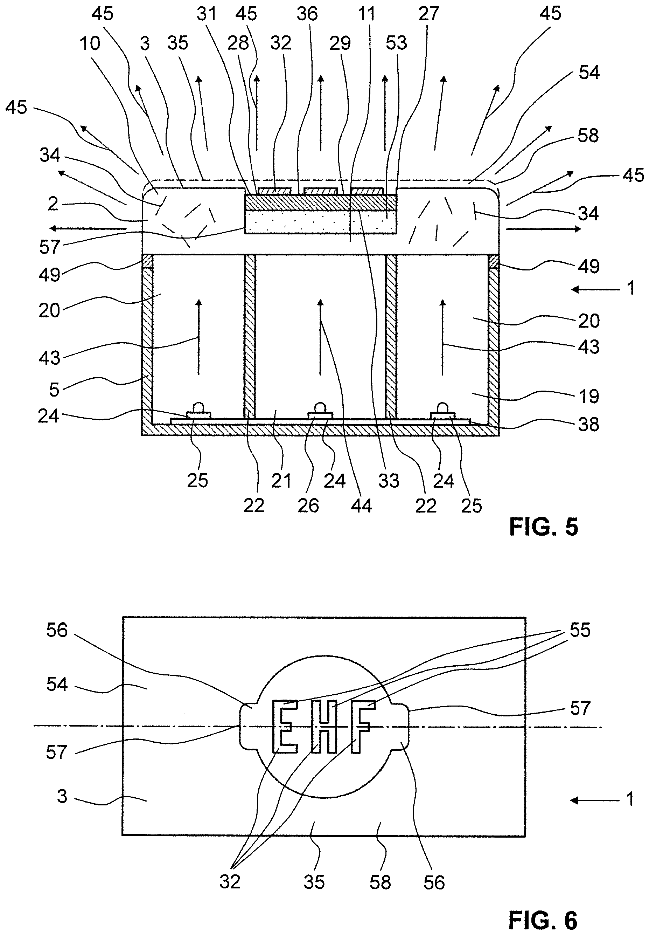

Die Figur 5 zeigt schematisch einen Querschnitt durch die Leuchte gemäss einer dritten Ausführungsform. Die Figur 6 zeigt schematisch eine Draufsicht auf die Abdeckung der Leuchte gemäss Figur 5. Die Leuchte 1 gemäss den Figuren 5, 6 umfasst eine einstückig ausgebildete Abdeckung 2 mit einem ersten Bereich 10 und einem zweiten Bereich 11, wobei die Abdeckung 2 mit einem lichtundurchlässigen Klebstoff 49 an einem Gehäuse 5 befestigt ist. Die Abdeckung 2 ist bevorzugt aus Kunststoff hergestellt. Im ersten Bereich 10 sind mit Laser hergestellte Lichtumlenkstrukturen 34 angeordnet. Die Abdeckung 2 weist zudem eine Vertiefung 27 auf innerhalb welcher ein flächiges Dekorelement 28 sowie ein unterhalb des flächigen Dekorelementes 28 angeordneten flächigen Diffusor 53, welcher ein eigenständiges Bauteil bildet, angeordnet sind. Das flächige Dekorelement 28 umfasst eine Dekorfolie 31 mit einer Vorderseite 36 und einer Rückseite 33. Auf der Vorderseite 36 ist eine Bedruckung 32 angeordnet, welche, wie in Figur 6 erkennbar, ein graphisches Element 55 bildet, welches die Buchstaben E, H und F umfasst. Wie in den Figuren 5, 6 ersichtlich, weist das flächige Dekorelement 28 als auch der flächige Diffusor 53 jeweils zwei Fortsätze 56 auf, welche in einen jeweiligen Führungsbereich 57 der Vertiefung 27 eingreifen. Hierdurch sind das flächige Dekorelement 28 als auch der flächige Diffusor 53 sicher in der Vertiefung 27 positioniert sowie drehsicher gehalten. Auf wenigstens einem Teilbereich einer Sichtseite 3 der Abdeckung 2 kann optional eine transluzente, bevorzugt transparente, Schutzschicht 54 (mit gestrichelter Linie angedeutet) angeordnet sein, welche die Vorderseite 29 des flächigen Dekorelementes 28 überspannt. Somit ist das flächige Dekorelement 28 sowie der flächige Diffusor 53 vollständig von der Abdeckung 2 sowie von der Schutzschicht 54 umschlossen und so gegen Umwelteinflüsse geschützt. Die Schutzschicht 54 ist bevorzugt aus Kunststoff, insbesondere aus Lack, wie zum Beispiel Polyurethan oder Polyurea, hergestellt.

Bevorzugt wird die Schutzschicht 54 auf die Sichtseite 3 der Abdeckung 2 angespritzt. Besonders bevorzugt wird zuerst die Abdeckung 2 gespritzt und gleichzeitig oder danach, bevorzugt unmittelbar danach, die Schutzschicht 54 an die Abdeckung 2 angespritzt. Bevorzugt wird die Anordnung umfassend die Abdeckung 2 und die Schutzschicht 54 in einem Zweikomponentenspritzgussverfahren hergestellt. Vorteilhaft, um eine effiziente und somit kostengünstige Herstellung der Leuchte 1 zu ermöglichen, werden die Abdeckung 2 und die Schutzschicht 54 in aufeinanderfolgenden oder parallel laufenden Prozessen auf einer Spritzgussmaschine hergestellt (nicht dargestellt). Die Spritzgussmaschine weist hierzu vorteilhaft eine Wendeplatte oder eine Verschiebeplatte auf, um die Abdeckung 2 nach ihrer erfolgten Herstellung zu drehen bzw. zu verschieben und in der gedrehten oder verschobenen Position mit einer anderen Formhälfte eine Kavität zur Erzeugung der Schutzschicht 54 zu bilden. Die Abdeckung 2 und die Schutzschicht 54, allenfalls von unterschiedlichen Bauteilexemplaren, können dann also zyklusweise und zyklusgleich hergestellt werden. Entsprechende Wendeplatten-, Schiebetisch- oder Drehtisch-Schliesseinheiten sind dem Fachmann aus dem Stand der Technik zur Genüge bekannt.

Vom Gehäuse 5, dem lichtundurchlässigen Klebstoff 49 sowie der Abdeckung 2 wird ein Innenraum 19 gebildet. Der Innenraum 19 weist einen ersten Innenraumbereich 20 und einen zweiten Innenraumbereich 21 auf. Der erste Innenraumbereich 20 ist umlaufend um den zweiten Innenraumbereich 21 ausgebildet und teilweise durch das umlaufend ausgebildete, zweite Lichtschott 22 vom zweiten Innenraumbereich 21 getrennt. Die Leuchte 1 umfasst ein erstes Leuchtmittel 25 aufweisend mehrere LEDs 24 sowie ein zweites Leuchtmittel 26 aufweisend mehrere LEDs 24. Sämtliche LEDs 24 sind auf einer einzigen Platine 38 angeordnet, wobei die LEDs 24 des ersten Leuchtmittels 25 im ersten Innenraumbereich 20 und die LEDs 24 des zweiten Leuchtmittels 26 im zweiten Innenraumbereich 21 angeordnet sind. Das von den LEDs 24 des ersten Leuchtmittels 25 ausgesandte Licht strömt gemäss dem Pfeil 43 durch den bevorzugt mit einem Gas, bevorzugter mit Luft, gefüllten ersten Innenraumbereich 20 und danach durch den ersten Bereich 10 der Abdeckung 2. Aufgrund der im Inneren des Bereiches 10 angeordneten Lichtumlenkstrukturen 34 wird das Licht gezielt umgelenkt und verlässt gemäss den Pfeilen 45 gezielt teilweise die Leuchte 1 über die Sichtseite 3 der Abdeckung 2 sowie gezielt teilweise über die optional vorhandene Schutzschicht 54. Das von den LEDs 24 des zweiten Leuchtmittels 26 ausgestrahlte Licht strömt gemäss dem Pfeil 44 durch den bevorzugt mit einem Gas, bevorzugt mit Luft, gefüllten Innenraumbereich 21 und danach durch den zweiten Bereich 11 der Abdeckung 2, den flächigen Diffusor 53 sowie das flächige Dekorelement 28 und verlässt gemäss den Pfeilen 45 die Leuchte 1 über die Schutzschicht 54. Bei eingeschaltetem zweiten Leuchtmittel 26 sieht somit ein Betrachter, insbesondere in der Draufsicht auf eine Sichtseite 35 der Leuchte 1, das graphische Element 55 umfassend die Buchstaben E, H und F. Die Sichtseite 35 der Leuchte 1 gemäss den Figuren 5, 6 wird, wie in der Figuren 5, 6 ersichtlich, teilweise von einer äusseren Oberfläche 58 der Schutzschicht 54 gebildet.

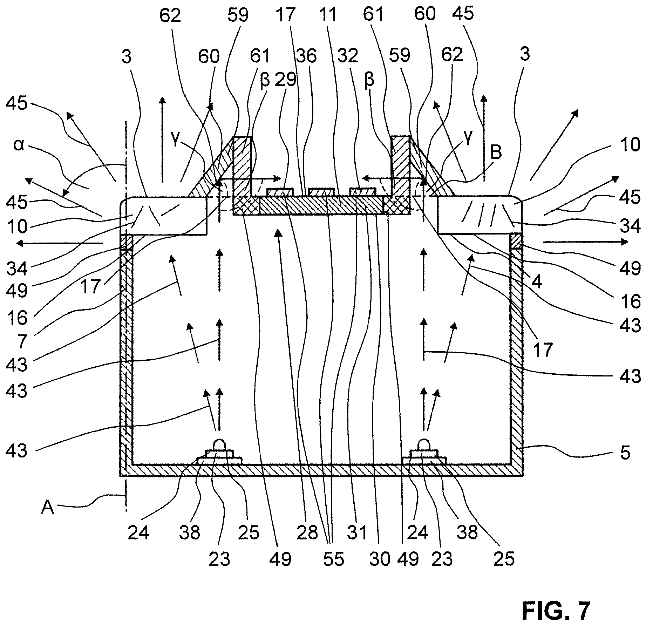

Die Figur 7 zeigt schematisch einen Querschnitt durch die Leuchte gemäss einer vierten Ausführungsform. Die Leuchte 1 gemäss der Figur 7 umfasst eine Abdeckung 2, welche einen ersten Bereich 10, einen zweiten Bereich 11 sowie einen dritten Bereich 59 aufweist, wobei der dritte Bereich 59 zwischen dem ersten Bereich 10 und dem zweiten Bereich 11 angeordnet ist. Der erste Bereich 10 der Abdeckung 2 ist mittels eines lichtundurchlässigen Klebstoffes 49 an einem Gehäuse 5 unlösbar befestigt. Der dritte Bereich 59 schliesst unmittelbar an den ersten Bereich 10 und den zweiten Bereich 11 an. Der dritte Bereich 59 ist umlaufend um den zweiten Bereich 11 ausgebildet und der erste Bereich 10 ist umlaufend um den dritten Bereich 59 ausgebildet. Der dritte Bereich 59 der Abdeckung 2 umfasst einen relativ zum zweiten Bereich 11 der Abdeckung 2 erhabenen und am ersten Bereich 10 befestigten ersten Abschnitt 60, welcher in Richtung der die Leuchte 1 umgebende Umgebung sich erstreckt, sowie einen zweiten Abschnitt 61, welcher am ersten Abschnitt 60 sowie am zweiten Bereich 11 befestigt ist.

Der zweite Bereich 11 weist ein flächiges Dekorelement 28 auf umfassend eine lichtundurchlässige Dekorfolie 31, wobei die Vorderseite 36 des flächigen Dekorelementes 28 teilweise durch eine Bedruckung 32 gebildet ist. Das flächige Dekorelement 28 ist mittels eines lichtundurchlässigen Klebstoffes 49 am dritten Bereich 59 unlösbar befestigt. Das Leuchtmittel 23 der Leuchte 1 umfasst ausschliesslich ein erstes Leuchtmittel 25, welches LEDs 24 aufweist. Diese LEDs 24 strahlen Licht aus, welches gleichzeitig auf einen ersten Teilbereich 16 der Rückseite 4 der Abdeckung 2 sowie auf einen durch den ersten Abschnitt 60 des dritten Bereiches 59 gebildeten lichtreflektierenden dritten Teilbereich 62 der Rückseite 4 auftrifft, wie dies mit den Pfeilen 43 angedeutet ist. Das auf den ersten Teilbereich 16 auftreffende Licht wird von den innerhalb des ersten Bereiches 10 der Abdeckung 2 angeordneten Lichtumlenkstrukturen 34 gezielt umgelenkt und so die Sichtseite 3 der Abdeckung 2 gezielt ausgeleuchtet, wie dies mit den Pfeilen 45 angedeutet ist.

Bevorzugt sind die Lichtumlenkstrukturen 34 der Abdeckung 2 derart ausgebildet, so dass das Licht seitlich in einem Winkel α von grösser als 0° bis 90°, bevorzugter von grösser als 0° bis 60°, noch bevorzugter von grösser als 0° bis 45°, von der Abdeckung 2 abstrahlen kann. Der Winkel α wird, bevorzugt im Querschnitt durch die Leuchte 1 gesehen, bevorzugt relativ zu einer Längsachse A (gestrichelte Linie) einer Seitenwandung 7 des Gehäuses 5 der Leuchte 1 gemessen.

Das vom ersten Leuchtmittel 25 auf den vom ersten Abschnitt 60 des dritten Bereiches 59 gebildeten dritten Teilbereich 62 der Rückseite 4 der Abdeckung 2 abgestrahlte Licht wird vom dritten Teilbereich 62 der Rückseite 4 um einen Winkel β von beispielsweise ca. 90°, umgelenkt. Das derart umgelenkte Licht strömt durch den transluzent, bevorzugt transparent, ausgebildeten zweiten Abschnitt 61 sowie entlang der mit der Bedruckung 32 versehenen Vorderseite 36 der Dekorfolie 31, so dass das von der Bedruckung 32 gebildete graphische Element 55 beleuchtet ist und insbesondere in der Draufsicht auf die Sichtseite 3 der Abdeckung 2 sichtbar ist. Für die Lichtumlenkung durch Reflexion ist der erste Abschnitt 60 des dritten Bereiches 59, insbesondere der durch den ersten Abschnitt 60 gebildete dritte Teilbereich 62 der Rückseite 4 der Abdeckung 2, bevorzugt in einem Winkel γ von grösser als 0° bis kleiner als 90°, bevorzugter in einem Winkel γ von 30° - 60°, noch bevorzugter in einem Winkel γ von ca. 45°, geneigt zu einer Längsachse B (gestrichelte Linie) durch den zweiten Teilbereich 17 der Sichtseite 3 der Abdeckung 2. Durch die Auswahl unterschiedlicher Winkel γ können unterschiedliche Leuchteffekte erzielt werden. Selbstverständlich kann der zweite Bereich 11 der Abdeckung 2, insbesondere die Dekorfolie 31 des flächigen Dekorelementes 28, auch transluzent, insbesondere transparent, ausgebildet sein. In diesem Fall weist die Leuchte 1 bevorzugt ein zweites Leuchtmittel 26 auf (nicht dargestellt) zur bevorzugt direkten Hinterleuchtung einer Rückseite 30 des flächigen Dekorelementes 28. Alternativ oder zusätzlich zu dem zweiten Leuchtmittel 26 kann das Leuchtmittel 23 dritte Leuchtmittel aufweisen (nicht dargestellt) zur bevorzugt direkten Ausstrahlung von Licht auf den dritten Teilbereich 62 der Rückseite 4 der Abdeckung 2.

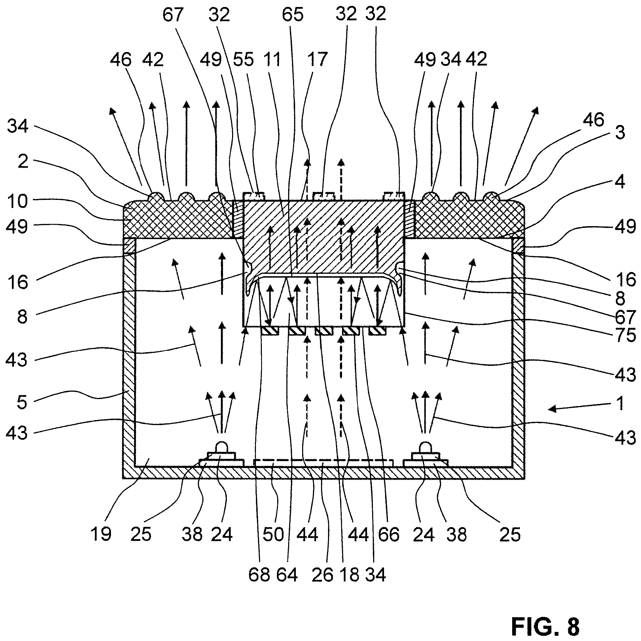

Die Figur 8 zeigt schematisch einen Querschnitt durch die Leuchte 1 gemäss einer fünften Ausführungsform. Die Leuchte 1 gemäss der Figur 8 umfasst eine Abdeckung 2 mit einem ersten Bereich 10 und einem zweiten Bereich 11. Der erste Bereich 10 ist mittels eines lichtundurchlässigen Klebstoffes 49 unlösbar an einem einstückig ausgebildeten Gehäuse 5 befestigt und der zweite Bereich 11 ist mittels eines lichtundurchlässigen Klebstoffes 49 am ersten Bereich 10 unlösbar befestigt. Der erste Bereich 10 weist Lichtumlenkstrukturen 34 auf, welche einen ersten Teilbereich 15 der Sichtseite 3 der Abdeckung 2 bilden. Der zweite Bereich 11 der Abdeckung 2 ragt in einen von der Abdeckung 2, dem lichtundurchlässigen Klebstoff 49 sowie dem Gehäuse 5 gebildeten Innenraum 19. Die Leuchte 1 umfasst einen Lichtleiter 64 mit einer Vorderseite 65 und einer Rückseite 66, wobei der Lichtleiter 64 an seinem Rand ein einzige umlaufende Rastzunge 8 aufweist, welche in eine umlaufende Vertiefung 67 des zweiten Bereiches 11 eingreift, so dass der Lichtleiter 64 lösbar am zweiten Bereich 11 befestigt ist. Dies bietet den Vorteil, dass der Lichtleiter 64 leicht austauschbar ist. Zwischen einem durch den zweiten Bereich 11 gebildeten zweiten Teilbereich 18 der Rückseite 4 der Abdeckung 2 und der Vorderseite 65 des Lichtleiters 64 ist ein Hohlraum 68 angeordnet. An der Rückseite 66 des Lichtleiters 64 sind Lichtumlenkstrukturen 34 aufgedruckt. Alternativ oder zusätzlich können die Lichtumlenkstrukturen 34 auch als Erhebungen und / oder Vertiefungen ausgebildet sein, welche durch das Material des Lichtleiters 64 gebildet sind. Selbstverständlich sind auch Lichtumlenkstrukturen 34 innerhalb des Lichtleiters 64 möglich.

Die Leuchte 1 weist ein erstes Leuchtmittel 25 auf, welches LEDs 24 umfasst. Optional kann die Leuchte 1 zusätzlich ein zweite Leuchtmittel 26 umfassen, welche zum Beispiel, wie mit gestrichelten Linien angedeutet ist, als flächiges Leuchtmittel 50 ausgebildet ist. Das von den ersten Leuchtmittel 25 ausgestrahlte Licht trifft, wie mit den Pfeilen 43 angedeutet, auf einen ersten Teilbereich 16 der Rückseite 4 der Abdeckung 2 sowie gleichzeitig auf die Rückseite 66 des Lichtleiters 64. Das auf den ersten Teilbereich 16 auftreffende Licht strömt durch die Abdeckung 2 hindurch und wird gezielt an den als Erhebungen ausgebildeten Lichtumlenkstrukturen 34 umgelenkt zur gezielten Ausleuchtung der Sichtseite 3 der Abdeckung 2. Das auf die Rückseite 66 des Lichtleiters 64 auftreffende Licht pflanzt sich innerhalb des Lichtleiters 64 fort und wird mittels der aufgedruckten Lichtumlenkstrukturen 34 in die Richtung des zweiten Teilbereiches 17 der Sichtseite 3 umgelenkt. Aufgrund der bevorzugt im Hohlraum 68 sowie dem Innenraum 19 angeordneten Gases, welches bevorzugt Luft ist, ist eine verbesserte Lichtleitung innerhalb des Lichtleiters 64 möglich. Die Lichtumlenkstrukturen 34 können bevorzugt in der Form eines graphischen Elementes angeordnet sein (nicht dargestellt), so dass, falls das erste Leuchtmittel 25 Licht aussendet, das graphische Element, bevorzugt in der Draufsicht auf die Sichtseite 3 der Abdeckung 2, sichtbar ist. Alternativ oder zusätzlich kann der zweite Teilbereich 17 der Sichtseite 3 eine Bedruckung 32 in der Form eines graphischen Elementes 55 aufweisen, wie dies mit gestrichelten Linien in der Figur 8 angedeutet ist. Falls das erste Leuchtmittel 25 und / oder ein gegebenenfalls vorhandenes zweites Leuchtmittel 26 Licht aussendet wird das graphische Element 55 sichtbar. Das vom optional vorhandenen zweiten Leuchtmittel 26 ausgesendete Licht ist mit den Pfeilen 44 angedeutet.

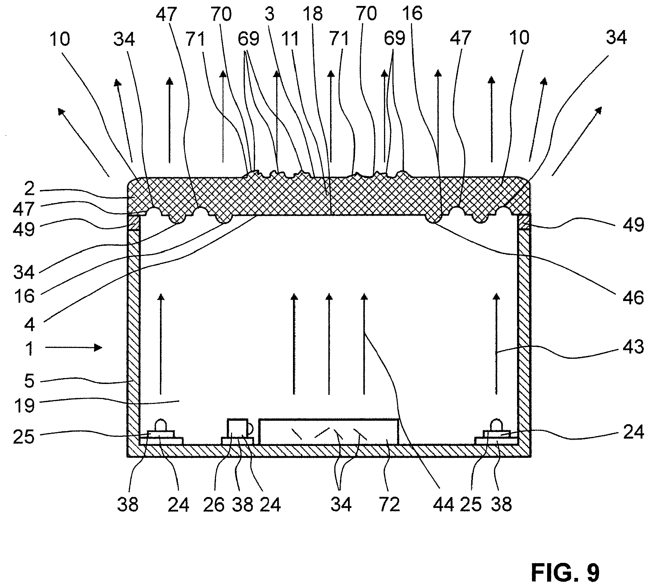

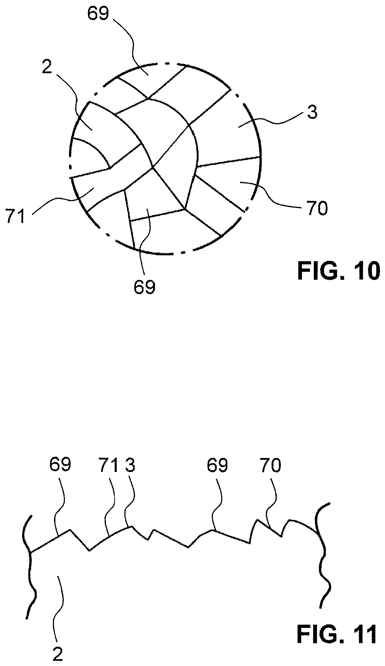

Die Figur 9 zeigt schematisch einen Querschnitt durch die Leuchte gemäss einer sechsten Ausführungsform. Die Figur 10 zeigt schematisch eine Draufsicht auf einen Teilbereich der Abdeckung der Leuchte gemäss Figur 9. Die Figur 11 zeigt schematisch einen Querschnitt durch den Teilbereich der Abdeckung gemäss der Figur 9. Die Figuren 9, 10 und 11 zeigen eine Leuchte 1 umfassend eine Abdeckung 2 sowie ein mittels eines lichtundurchlässigen Klebstoffes 49 an der Abdeckung 2 befestigtes Gehäuse 5. Die Rückseite 4 der Abdeckung 2, welche durch einen ersten Bereich 10 der Abdeckung 2 gebildet ist, umfasst Lichtumlenkstrukturen 34, welche als Erhebung 46 und / oder als Vertiefung 47 ausgebildet sind. Die Erhebungen 46 als auch die Vertiefungen 47 sind durch das Material der Abdeckung 2, insbesondere des ersten Bereiches 10, gebildet. Wie in den Figuren 9, 10 und 11 erkennbar, bilden zusätzlich Erhebungen 69 der Abdeckung 2 einen Bereich der Sichtseite 3 der Abdeckung 2, wobei dieser Bereich der Sichtseite 3 von einer Vielzahl von Facetten 70 gebildet wird. Dieser durch die Facetten 70 gebildete Bereich 71 weist, insbesondere in der Draufsicht auf diesen Bereich 71, eine brillante Erscheinungsform auf. Die Facetten 70 bewirken nicht, wie die Lichtumlenkstrukturen 34, eine gezielte Lichtumlenkung. Somit kann mittels der Facetten 70 die Sichtseite 3 der Abdeckung 2 nicht gezielt ausgeleuchtet werden. Solche Facetten 70 sind beispielhaft im Schutzrecht DE 10 2018 112 122 A1 dargestellt.

In einem Innenraum 19 des Gehäuses 5 ist ein erstes Leuchtmittel 25, welches mehrere LEDs 24 umfasst, angeordnet. Die Leuchte 1 umfasst zudem ein zweites Leuchtmittel 26, welches eine LED 24 aufweist. Das vom zweiten Leuchtmittel 26 ausgestrahlte Licht wird in einen Lichtleiter 72 eingekoppelt. Das in den Lichtleiter 72 eingekoppelte Licht pflanzt sich innerhalb des Lichtleiter 72 fort und wird durch innerhalb des Lichtleiters 72 angeordneten Lichtumlenkstrukturen 34 in die Richtung eines zweiten Teilbereiches 18 der Rückseite 4 eines zweiten Bereiches 11 der Abdeckung 2, welche die Facetten 70 umfasst, umgelenkt, wie dies mit den Pfeilen 44 angedeutet ist. Das Licht tritt dann durch den zweiten Bereich 11, insbesondere durch die Facetten 70, hindurch und wird anschliessend von der Sichtseite 3 der Abdeckung 2 abgestrahlt. Das vom ersten Leuchtmittel 25 ausgestrahlte Licht trifft auf die als Erhebungen 46 und Vertiefungen 47 ausgebildeten Lichtumlenkstrukturen 34 und wird durch diese gezielt umgelenkt zur gezielten Ausleuchtung der Sichtseite 3 der Abdeckung 2. Wie in der Figur 9 erkennbar, weist die Leuchte 1 keine erstes Lichtschott 48 oder zweites Lichtschott 22 auf.

Die vorstehende Erfindung ist selbstverständlich nicht auf die beschriebenen Ausführungsformen beschränkt, und eine Vielzahl von Abwandlungen ist möglich. So übt zum Beispiel bei der Leuchte 1 gemäss der Figur 1 das auf dem zweiten Bereich 11 angeordnete flächige Dekorelement 28 die Dekorfunktion und der erste Bereich 10 die Signalfunktion aus. Selbstverständlich kann das flächige Dekorelement 28 auch zum Beispiel auf dem ersten Bereich 10 angeordnet sein. Bei einer solchen Ausführungsform übt somit bevorzugt der zweite Bereich 11 die Signalfunktion aus und das beispielsweise auf dem ersten Bereich 10 angeordnete flächige Dekorelement 28 übt die dekorative Funktion aus. Das eben Gesagte gilt bevorzugt entsprechend auch zum Beispiel für die Leuchten 1 gemäss den Figuren 4, 5 und 7.

Bei der Leuchte 1 gemäss Figur 1 sind der zweite Bereich 11 und das flächige Dekorelement 28 zwei separate Bauteile. Selbstverständlich können der zweite Bereich 11 und das flächige Dekorelement 28 auch ein einziges Bauteil bilden. Das eben Gesagte kann selbstverständlich entsprechend auch zum Beispiel für die Leuchte 1 gemäss der Figur 4 gelten. Ebenfalls können bei der Leuchte 1 gemäss der Figur 5 beispielsweise der flächige Diffusor 53 und das flächige Dekorelement 28 ein einziges Bauteil bilden.

Anstatt als in der durch die Sichtseite 3 gebildeten Vertiefung 27 können das flächige Dekorelement 28 und / oder der flächige Diffusor 53 auch in einer von der Rückseite 4 der Abdeckung 2 begrenzten Vertiefung angeordnet sein. Bei der Leuchte 1 gemäss der Figur 5 sind in diesem Fall das flächige Dekorelement 28 und / oder der flächige Diffusor 53 zum Beispiel mittels eines Klebstoffes an der Abdeckung 2 befestigt sein.

**BEZUGSZEICHENLISTE**

| | | | |
|---|---|---|---|
| 1 | Leuchte | 21 | zweiter Innenraumbereich |
| 2 | Abdeckung | 22 | zweites Lichtschott |
| 3 | Sichtseite der Abdeckung 2 | 23 | Leuchtmittel |
| 4 | Rückseite der Abdeckung 2 | 24 | LED |
| 5 | Gehäuse | 25 | erstes Leuchtmittel |
| 6 | Bodenwandung | 26 | zweites Leuchtmittel |
| 7 | Seitenwandung | 27 | Vertiefung in der Abdeckung 2 |
| 8 | Rastzunge | | |
| 9 | Vertiefung im Gehäuse 5 | 28 | flächiges Dekorelement |
| 10 | erster Bereich der Abdeckung 2 | 29 | Vorderseite des flächigen Dekorelementes 28 |
| 11 | zweiter Bereich der Abdeckung 2 | 30 | Rückseite des flächigen Dekorelementes 28 |
| 12 | Rastelement | 31 | Dekorfolie |
| 13 | Vertiefung des ersten Bereiches 10 | 32 | Bedruckung |
| | | 33 | Rückseite der Dekorfolie 31 |
| 14 | Stirnseite des Gehäuses 5 | 34 | Lichtumlenkstruktur |
| 15 | erster Teilbereich der Sichtseite 3 (durch ersten Bereich 10 gebildet) | 35 | Sichtseite der Leuchte 1 |
| | | 36 | Vorderseite der Dekorfolie 31 |
| | | 37 | Nase |
| 16 | erster Teilbereich der Rückseite 4 (durch ersten Bereich 10 gebildet) | 38 | Platine |
| | | 39 | Vorderseite der Platine 38 |
| | | 40 | Rückseite der Platine 38 |
| 17 | zweiter Teilbereich der Sichtseite 3 (durch zweiten Bereich 11 gebildet) | 41 | planer Oberflächenbereich der Sichtseite 3 |
| | | 42 | Bereich der Sichtseite 3 |
| 18 | zweiter Teilbereich der Rückseite 4 (durch zweiten Bereich 11 gebildet) | 43 | Pfeil |
| | | 44 | Pfeil |
| | | 45 | Pfeil |
| 19 | Innenraum | 46 | Erhebung |
| 20 | erster Innenraumbereich | 47 | Vertiefung |
| 48 | erstes Lichtschott | 65 | Vorderseite des Lichtleiter 64 |
| 49 | Klebstoff | 66 | Rückseite des Lichtleiters 64 |
| 50 | flächiges Leuchtmittel | 67 | Vertiefung |
| 51 | Lichtleiter | 68 | Hohlraum |
| 52 | Diffusorstrukturen | 69 | Erhebung |
| 53 | flächiger Diffusor | 70 | Facette |
| 54 | Schutzschicht | 71 | durch Facette 70 gebildeter Bereich der Sichtseite 3 |
| 55 | Graphisches Element | | |
| 56 | Fortsatz | 72 | Lichtleiter |
| 57 | Führungsbereich der Vertiefung 27 | 73 | Grundkörper |
| | | 74 | Fahne |
| 58 | äussere Oberfläche der Schutzschicht 54 | 75 | Seitenfläche des Lichtleiters 64 |
| 59 60 | dritter Bereich der Abdeckung 2 | 76 | Partikel |
| | | 77 | zweiter Abschnitt der Abdeckung 2 |
| | erster Abschnitt des dritten Bereiches 59 | | |
| | | 78 | erster Abschnitt der Abdeckung 2 |
| 61 | zweiter Abschnitt des dritten Bereiches 59 | | |
| 62 | | α | Winkel |
| | dritter Teilbereich der Rückseite 4 der Abdeckung 2 (durch dritten Bereich 59 gebildet) | β | Winkel |
| | | γ | Winkel |
| | | A | Längsachse |
| | | B | Längsachse |
| 64 | Lichtleiter | | |

## Patentansprüche

1. Leuchte (1), insbesondere Signalleuchte, für ein Fahrzeug, insbesondere für ein Kraftfahrzeug, umfassend
eine wenigstens bereichsweise transluzente Abdeckung (2) mit einer Sichtseite (3) und einer Rückseite (4),
einen Innenraum (19), welcher wenigstens einen ersten Innenraumbereich (20) und einen zweiten Innenraumbereich (21) aufweist, sowie
ein Leuchtmittel (23), welches Licht in Richtung der Rückseite (4) der Abdeckung (2) ausstrahlt, und welches wenigstens ein erstes Leuchtmittel (25) umfasst, das im ersten Innenraumbereich (20) angeordnet ist, und ein zweites Leuchtmittel (26) umfasst, das im zweiten Innenraumbereich (21) angeordnet ist,
wobei die Abdeckung (2) eine oder mehrere Lichtumlenkstrukturen (34) aufweist zur gezielten Abstrahlung des an die Rückseite (4) der Abdeckung (2) ausgestrahlten Lichtes von der Sichtseite (3) der Abdeckung (2),
wobei die Abdeckung (2) wenigstens einen ersten Bereich (10) aufweist, der einen ersten Teilbereich (16) der Rückseite (4) der Abdeckung bildet, und einen zweiten Bereich (11) aufweist, der einen zweiten Teilbereich (18) der Rückseite (4) der Abdeckung (2) bildet, wobei der erste Bereich (10) und / oder der zweite Bereich (11) die eine oder mehreren Lichtumlenkstrukturen (34) aufweist,
wobei das erste Leuchtmittel (25) Licht direkt auf den ersten Teilbereich (16) der Rückseite (4) der Abdeckung (2) ausstrahlt und das zweite Leuchtmittel (26) Licht direkt auf den zweiten Teilbereich (18) der Rückseite (4) der Abdeckung (2) ausstrahlt,
wobei die Abdeckung (2) wenigstens ein erstes Lichtschott (48) aufweist, mit welchem wenigstens der erste Bereich (10) und der zweite Bereich (11) der Abdeckung (2) vollständig optisch voneinander getrennt sind, so dass Licht des Leuchtmittels (23), mittels welchem der erste Teilbereich (16) der Rückseite (4) hinterstrahlt wird, nicht in den zweiten Bereich (11) der Abdeckung (2) übertreten kann und Licht des Leuchtmittels (23), mittels welchem der zweite Teilbereich (18) der Rückseite (4) hinterstrahlt wird, nicht in den ersten Bereich (11) der Abdeckung (2) übertreten kann,
und wobei die Leuchte (1) wenigstens ein zweites Lichtschott (22) aufweist, welches unmittelbar an das erste Lichtschott (48) anschliesst und sich in den Innenraum (19) der Leuchte (1) hineinerstreckt, wobei das zweite Lichtschott (22) wenigstens den ersten Innenraumbereich (20) und den zweiten Innenraumbereich (21) wenigstens teilweise optisch voneinander trennt.

2. Leuchte (1) nach Anspruch 1, **dadurch gekennzeichnet, dass** die eine oder mehreren Lichtumlenkstrukturen (34) wenigstens einen Bereich (42) der Sichtseite (3) und / oder der Rückseite (4) der Abdeckung (2) bilden und / oder im Inneren der Abdeckung (2) angeordnet sind.

3. Leuchte (1) nach Anspruch 2, **dadurch gekennzeichnet, dass** die eine oder mehreren Lichtumlenkstrukturen (34) wenigstens einen Bereich (42) der Sichtseite (3) und / oder der Rückseite (4) der Abdeckung (2) bilden, wobei die eine oder mehreren Lichtumlenkstrukturen (34) von einer durch die Abdeckung (2) gebildeten mindestens einen Erhebung (46) und / oder mindestens einen Vertiefung (47) und / oder von, im Querschnitt durch die Abdeckung (2) gesehen, relativ zueinander geneigten, planen Oberflächenbereiche (41) der Sichtseite (3) ausgebildet sind.

4. Leuchte (1) nach Anspruch 2 oder 3, **dadurch gekennzeichnet, dass** wenigstens ein Bereich des wenigstens einen Bereiches (42) der Sichtseite (3) und / oder der Rückseite (4), bevorzugt wenigstens ein Bereich des wenigstens einen Bereiches (42) der Sichtseite (3), welcher durch die eine oder mehreren Lichtumlenkstrukturen (34) gebildet ist, insgesamt eben oder gekrümmt ausgebildet ist, wobei bevorzugt der gekrümmte Bereich in Richtung der die Leuchte (1), insbesondere Signalleuchte, umgebenden Umgebung gekrümmt ist.

5. Leuchte (1) nach einem der vorangehenden Ansprüche, **dadurch gekennzeichnet, dass** der erste Bereich (10), welcher bevorzugt die eine oder mehreren Lichtumlenkstrukturen (34) aufweist, wenigstens teilweise, bevorzugt vollständig, umlaufend um den zweiten Bereich (11) ausgebildet ist.

6. Leuchte (1) nach einem der vorangehenden Ansprüche, **dadurch gekennzeichnet, dass** die Abdeckung (2) aufweisend wenigstens den ersten Bereich (10) und den zweiten Bereich (11) einstückig ausgebildet ist.

7. Leuchte (1) nach einem der vorangehenden Ansprüche, **dadurch gekennzeichnet, dass** die Leuchte (1), insbesondere Signalleuchte, ein Gehäuse (5) aufweist, wobei die Abdeckung (2) mittels des ersten Bereiches (10) der Abdeckung (2) am Gehäuse (5) befestigt, bevorzugt lösbar befestigt, ist, und wobei bevorzugt der zweite Bereich (11) der Abdeckung (2) an dem ersten Bereich (10) der Abdeckung (2) befestigt, bevorzugt lösbar befestigt, ist.

8. Leuchte (1) nach einem der vorangehenden Ansprüche, **dadurch gekennzeichnet, dass** der erste Bereich (10) der Abdeckung (2) einen ersten Teilbereich (15) der Sichtseite (2) bildet, wobei der zweite Bereich (11) der Abdeckung (2) einen zweiten Teilbereich (17) der Sichtseite (3) der Abdeckung (2) bildet, und wobei auf dem ersten Teilbereich (15) der Sichtseite (3) und / oder rückseitig zum ersten Teilbereich (16) der Rückseite (4) und / oder auf dem zweiten Teilbereich (17) der Sichtseite (3) und / oder rückseitig zum zweiten Teilbereich (18) der Rückseite (4) ein wenigstens bereichsweise transluzentes, bevorzugt transparentes, flächiges Dekorelement (28), insbesondere umfassend eine Dekorfolie (31), mit einer Vorderseite (29) und einer Rückseite (30), angeordnet ist, welches ein graphisches Element (55) aufweist.

9. Leuchte (1) nach Anspruch 8, **dadurch gekennzeichnet, dass** an der Vorderseite (29) des flächigen Dekorelementes (28) und / oder an der Rückseite (30) des flächigen Dekorelementes (28), bevorzugt an der Rückseite (30) des flächigen Dekorelementes (28), ein flächiger Diffusor (53) angeordnet ist.

10. Leuchte (1) nach einem der vorangehenden Ansprüche, **dadurch gekennzeichnet, dass** das erste Leuchtmittel (25) wenigstens eine erste LED (24) aufweist und / oder das zweite Leuchtmittel (26), wenigstens eine zweite LED (24) aufweist, wobei bevorzugt das erste Leuchtmittel (25) und / oder das zweite Leuchtmittel (26), insbesondere bezüglich deren Lichtabstrahlung, unabhängig voneinander steuerbar sind.

11. Leuchte (1) nach einem der vorangehenden Ansprüche, **dadurch gekennzeichnet, dass** die Leuchte (1) wenigstens einen Lichtleiter (64) aufweist, wobei das Leuchtmittel (23) wenigstens das erste Leuchtmittel (25) und / oder das zweite Leuchtmittel (26), bevorzugt ausschliesslich das erste Leuchtmittel (25), umfasst, wobei das Licht wenigstens des ersten Leuchtmittels (25) und / oder des zweiten Leuchtmittels (26), bevorzugt des ausschliesslich vorhandenen ersten Leuchtmittels (25), wenigstens teilweise über den wenigstens einen Lichtleiter (64) auf den durch den zweiten Bereich (11) der Abdeckung (2) gebildeten zweiten Teilbereich (18) der Rückseite (4) der Abdeckung (2) gelangt.

12. Leuchte (1) nach Anspruch 11, **dadurch gekennzeichnet, dass** der Lichtleiter (64) eine Vorderseite (65) und eine Rückseite (66) sowie eine Seitenfläche (75) aufweist, welche die Vorderseite (65) und die Rückseite (66) miteinander verbindet, wobei die Vorderseite (65) des Lichtleiters (64) dem durch den zweiten Bereich (11) der Abdeckung (2) gebildeten zweiten Teilbereich (18) der Rückseite (4) der Abdeckung (2) zugewandt ist, wobei der Lichtleiter (64) bevorzugt eine oder mehrere Lichtumlenkstrukturen (34) aufweist zur Umlenkung von im Lichtleiter (64) sich fortpflanzenden Lichtes in Richtung des durch den zweiten Bereich (11) der Abdeckung (2) gebildeten zweiten Teilbereich (18) der Rückseite (4) der Abdeckung (2), wobei bevorzugt das Licht des ersten Leuchtmittels (25) und / oder des zweiten Leuchtmittels (26), bevorzugter des ausschliesslich vorhandenen ersten Leuchtmittels (25), über die Rückseite (66) und / oder die Seitenfläche (75) des Lichtleiters (64) in den Lichtleiter (64) gelangt.

13. Leuchte (1) nach einem der vorangehenden Ansprüche, **dadurch gekennzeichnet, dass** die Leuchte (1) wenigstens eine Platine (38), bevorzugt eine einzige Platine (38), aufweist, wobei das Leuchtmittel (23) auf der wenigstens einen Platine (38), bevorzugt auf der einzigen Platine (38), angeordnet ist.

14. Leuchte (1) nach einem der vorangehenden Ansprüche, **dadurch gekennzeichnet, dass** die Leuchte (1), insbesondere Signalleuchte, als ein Rücklicht, ein Bremslicht, ein zusätzliches Bremslicht, ein Nebelrücklicht, ein zusätzliches Nebelrücklicht, ein Blinker, ein seitlicher Blinker, ein Scheinwerfer, insbesondere ein Rückfahrscheinwerfer, ausgebildet ist.

15. Fahrzeug mit einer Leuchte (1), insbesondere Signalleuchte, nach einem der vorangehenden Ansprüche, **dadurch gekennzeichnet, dass** bevorzugt die Leuchte (1), insbesondere Signalleuchte, im Heckbereich des Fahrzeuges angeordnet ist.

16. Verfahren zur Herstellung einer Leuchte (1), insbesondere Signalleuchte, gemäss einem der Ansprüche 1-14, welche einen Innenraum (19) mit wenigstens einem ersten Innenraumbereich (20) und einem zweiten Innenraumbereich (21) aufweist, umfassend folgende Schritte:
- Bereitstellung einer Abdeckung (2), insbesondere einer aus Kunststoff hergestellten Abdeckung (2), mit einer Sichtseite (3) und einer Rückseite (4);
- Herstellung einer oder mehreren Lichtumlenkstrukturen (34), wobei die eine oder mehreren Lichtumlenkstrukturen (34) wenigstens einen Bereich (42) der Sichtseite (3) und / oder der Rückseite (4) der Abdeckung (2) bilden und / oder im Inneren der Abdeckung (2) angeordnet sind,
wobei
die Abdeckung (2) wenigstens einen ersten Bereich (10) und einen zweiten Bereich (11) aufweist, wobei der erste Bereich (10) und / oder der zweite Bereich (11) die eine oder mehreren Lichtumlenkstrukturen (34) aufweist, wobei
die Abdeckung (2) wenigstens ein erstes Lichtschott (48) aufweist, wobei wenigstens der erste Bereich (10) und der zweite Bereich (11) der Abdeckung (2) mit dem ersten Lichtschott (48) vollständig optisch voneinander getrennt sind, und wobei
die Leuchte (1) wenigstens ein zweites Lichtschott (22) aufweist, welches sich unmittelbar an das erste Lichtschott (48) anschliesst und sich in den Innenraum (19) der Leuchte (1) hineinerstreckt, wobei das zweite Lichtschott (22) wenigstens den ersten Innenraumbereich (20) und den zweiten Innenraumbereich (21) wenigstens teilweise optisch voneinander trennt.

## Claims

1. A lamp (1), in particular a signal lamp, for a vehicle, in particular for a motor vehicle, comprising
an at least partially translucent cover (2) with a visible side (3) and a rear side (4),
an interior space (19), which comprises at least a first interior space region (20) and a second interior space region (21), and
an illuminating means (23) which emits light in the direction of the rear side (4) of the cover (2) and which comprises at least a first illuminating means (25) arranged in the first interior space region (20) and a second illuminating means (26) arranged in the second interior space region (21),
wherein the cover (2) comprises one or more light deflecting structures (34) for the targeted radiation of the light emitted to the rear side (4) of the cover (2) from the visible side (3) of the cover (2),
wherein the cover (2) comprises at least a first region (10) which forms a first partial region (16) of the rear side (4) of the cover, and a second region (11) which forms a second partial region (18) of the rear side (4) of the cover (2), wherein the first region (10) and/or the second region (11) comprises the one or more light deflecting structures (34)
wherein the first illuminating means (25) emits light directly onto the first partial region (16) of the rear side (4) of the cover (2) and the second illuminating means (26) emits light directly onto the second partial region (18) of the rear side (4) of the cover (2),
wherein the cover (2) comprises at least a first light bulkhead (48), by means of which at least the first region (10) and the second region (11) of the cover (2) are completely optically separated from one another, so that light from the illuminating means (23), by means of which the first partial region (16) of the rear side (4) is backlit, cannot pass into the second region (11) of the cover (2) and light from the illuminating means (23), by means of which the second partial region (18) of the rear side (4) is backlit, cannot pass into the first region (11) of the cover (2),
and wherein the lamp (1) comprises at least one second light bulkhead (22) which directly adjoins the first light bulkhead (48) and extends into the interior space (19) of the lamp (1), wherein the second light bulkhead (22) at least partially optically separates the first interior space region (20) and the second interior space region (21) from one another.

2. The lamp (1) according to claim 1, **characterized in that** the one or more light deflecting structures (34) form at least one region (42) of the visible side (3) and/or the rear side (4) of the cover (2) and/or are arranged in the interior of the cover (2).

3. The lamp (1) according to claim 2, **characterized in that** the one or more light deflecting structures (34) form at least one region (42) of the visible side (3) and/or the rear side (4) of the cover (2), wherein the one or more light deflecting structures (34) are formed by at least one elevation (46) and/or at least one depression (47) formed by the cover (2) and/or by planar surface regions (41) of the visible side (3) which are inclined relative to one another as seen in cross-section through the cover (2).

4. The lamp (1) according to claim 2 or 3, **characterized in that** at least one region of the at least one region (42) of the visible side (3) and/or of the rear side (4), preferably at least one region of the at least one region (42) of the visible side (3), which is formed by the one or more light-deflecting structures (34), is designed to be flat or curved overall, preferably the curved region being curved in the direction of the surroundings surrounding the lamp (1), in particular signal lamp.

5. The lamp (1) according to one of the preceding claims, **characterized in that** the first region (10), which preferably comprises the one or more light deflecting structures (34), is formed at least partially, preferably completely, circumferentially around the second region (11).

6. The lamp (1) according to one of the preceding claims, **characterized in that** the cover (2) comprising at least the first region (10) and the second region (11) is formed in one piece.

7. The lamp (1) according to one of the preceding claims, **characterized in that** the lamp (1), in particular signal lamp, comprises a housing (5), the cover (2) being fastened, preferably detachably fastened, to the housing (5) by means of the first region (10) of the cover (2), and preferably the second region (11) of the cover (2) being fastened, preferably detachably fastened, to the first region (10) of the cover (2).

8. The lamp (1) according to one of the preceding claims, **characterized in that** the first region (10) of the cover (2) forms a first partial region (15) of the visible side (2), wherein the second region (11) of the cover (2) forms a second partial region (17) of the visible side (3) of the cover (2), and wherein on the first partial region (15) of the visible side (3) and/or on the rear side to the first partial region (16) of the rear side (4) and/or on the second partial region (17) of the visible side (3) and/or on the rear side to the second partial region (18) of the rear side (4) is arranged an at least regionally translucent, preferably transparent, two-dimensionally extending decorative element (28), in particular comprising a decorative foil (31), with a front side (29) and a rear side (30), which comprises a graphic element (55).

9. The lamp (1) according to claim 8, **characterized in that** a two-dimensionally extending diffuser (53) is arranged on the front side (29) of the two-dimensionally extending decorative element (28) and/or on the rear side (30) of the two-dimensionally extending decorative element (28), preferably on the rear side (30) of the two-dimensionally extending decorative element (28).

10. The lamp (1) according to one of the preceding claims, **characterized in that** the first illuminating means (25) comprises at least one first LED (24) and/or the second illuminating means (26) comprises at least one second LED (24), wherein preferably the first illuminating means (25) and/or the second illuminating means (26) can be controlled independently of one another, in particular with regard to their light emission.

11. The lamp (1) according to one of the preceding claims, **characterized in that** the lamp (1) has at least one light guide (64), wherein the illuminating means (23) comprises at least the first illuminating means (25) and/or the second illuminating means (26), preferably exclusively the first illuminating means (25), wherein the light of at least the first illuminating means (25) and/or the second illuminating means (26), preferably of the exclusively present first illuminating means (25), reaches at least partially via the at least one light guide (64) the second partial region (18) of the rear side (4) of the cover (2) formed by the second region (11) of the cover (2).

12. The lamp (1) according to claim 11, **characterized in that** the light guide (64) comprises a front side (65) and a rear side (66) as well as a side surface (75) which connects the front side (65) and the rear side (66) to one another, the front side (65) of the light guide (64) facing the second partial region (18) of the rear side (4) of the cover (2) formed by the second region (11) of the cover (2), wherein the light guide (64) preferably has one or more light deflecting structures (34) for deflecting light propagating in the light guide (64) towards the second partial region (18) of the rear side (4) of the cover (2) formed by the second region (11) of the cover (2), wherein preferably the light of the first illuminating means (25) and/or of the second illuminating means (26), more preferably of the exclusively present first illuminating means (25), enters the light guide (64) via the rear side (66) and/or the side surface (75) of the light guide (64).

13. The lamp (1) according to one of the preceding claims, **characterized in that** the lamp (1) comprises at least one circuit board (38), preferably a single circuit board (38), the illuminating means (23) being arranged on the at least one circuit board (38), preferably on the single circuit board (38).

14. The lamp (1) according to one of the preceding claims, **characterized in that** the lamp (1), in particular signal lamp, is designed as a tail light, a brake light, an additional brake light, a rear fog light, an additional rear fog light, a turn signal, a side turn signal, a headlight, in particular a reversing light.

15. A vehicle with a lamp (1), in particular signal lamp, according to one of the preceding claims, **characterized in that** preferably the lamp (1), in particular signal lamp, is arranged in the rear region of the vehicle.

16. A method of producing a lamp (1), in particular signal lamp, according to one of claims 1-14, which comprises an interior space (19) with at least a first interior space region (20) and a second interior space region (21), comprising the following steps:
- Providing a cover (2), in particular a cover (2) made of plastic, with a visible side (3) and a rear side (4);
- producing one or more light-deflecting structures (34), the one or more light-deflecting structures (34) forming at least one region (42) of the visible side (3) and/or of the rear side (4) of the cover (2) and/or being arranged in the interior of the cover (2),
wherein the cover (2) comprises at least a first region (10) and a second region (11), wherein the first region (10) and/or the second region (11) comprises the one or more light deflecting structures (34),
wherein the cover (2) comprises at least a first light bulkhead (48), wherein at least the first region (10) and the second region (11) of the cover (2) are completely optically separated from each other with the first light bulkhead (48),
and wherein the lamp (1) comprises at least one second light bulkhead (22) which directly adjoins the first light bulkhead (48) and extends into the interior space (19) of the lamp (1), the second light bulkhead (22) at least partially optically separating the first interior space region (20) and the second interior space region (21) from one another.

## Revendications

1. Feu (1), en particulier feu de signalisation, pour un véhicule, en particulier pour un véhicule à moteur, comprenant
un couvercle au moins partiellement translucide (2) avec une face visible (3) et une face arrière (4),
un espace intérieur (19), qui comprend au moins une première zone d'espace intérieur (20) et une deuxième zone d'espace intérieur (21), et
un moyen d'éclairage (23) qui émet de la lumière en direction de la face arrière (4) du couvercle (2) et qui comprend au moins un premier moyen d'éclairage (25) disposé dans la première zone d'espace intérieur (20) et un second moyen d'éclairage (26) disposé dans la seconde zone d'espace intérieur (21),
dans lequel le couvercle (2) comprend une ou plusieurs structures de déviation de la lumière (34) pour le rayonnement ciblé de la lumière émise vers la face arrière (4) du couvercle (2) à partir de la face visible (3) du couvercle (2),
dans lequel le couvercle (2) comprend au moins une première zone (10) qui forme une première zone partielle (16) de la face arrière (4) du couvercle, et une deuxième zone (11) qui forme une deuxième zone partielle (18) de la face arrière (4) du couvercle (2), dans lequel la première zone (10) et/ou la deuxième zone (11) comprend une ou plusieurs structures de déviation de la lumière (34),
dans lequel le premier moyen d'éclairage (25) émet de la lumière directement sur la première zone partielle (16) de la face arrière (4) du couvercle (2) et le second moyen d'éclairage (26) émet de la lumière directement sur la seconde zone partielle (18) de la face arrière (4) du couvercle (2),
dans lequel le couvercle (2) comprend au moins une première cloison de lumière (48), au moyen de laquelle au moins la première zone (10) et la deuxième zone (11) du couvercle (2) sont complètement séparées optiquement l'une de l'autre, de sorte que la lumière provenant du moyen d'éclairage (23), par lequel la première zone partielle (16) de la face arrière (4) est rétro-éclairée, ne puisse pas pénétrer dans la deuxième zone (11) du couvercle (2) et que la lumière du dispositif d'éclairage (23), par lequel la deuxième zone partielle (18) de la face arrière (4) est rétro-éclairée, ne puisse pas pénétrer dans la première zone (11) du couvercle (2),
le feu (1) comprenant au moins une deuxième cloison de lumière (22) qui est directement adjacente à la première cloison de lumière (48) et s'étend dans l'espace intérieur (19) du feu (1), la deuxième cloison de lumière (22) séparant optiquement au moins partiellement la première zone de l'espace intérieur (20) et la deuxième zone de l'espace intérieur (21) l'une de l'autre.

2. Feu (1) selon la revendication 1, **caractérisée en ce que** la ou les structures de déviation de la lumière (34) forment au moins une zone (42) de la face visible (3) et/ou de la face arrière (4) du couvercle (2) et/ou sont disposées à l'intérieur du couvercle (2).

3. Feu (1) selon la revendication 2, **caractérisée en ce que** la ou les structures de déviation de la lumière (34) forment au moins une zone (42) de la face visible (3) et/ou de la face arrière (4) du couvercle (2), la ou les structures de déviation de la lumière (34) étant formées par au moins une élévation (46) et/ou au moins un creux (47) formé par le couvercle (2) et/ou par des zones de surface planes (41) de la face visible (3) qui sont inclinées l'une par rapport à l'autre lorsqu'elles sont vues en coupe transversale à travers le couvercle (2).

4. Feu (1) selon la revendication 2 ou 3, **caractérisé en ce qu'**au moins une zone de l'au moins une zone (42) de la face visible (3) et/ou de la face arrière (4), de préférence au moins une zone de l'au moins une zone (42) de la face visible (3), qui est formée par la ou les structures de déviation de la lumière (34), est conçue de manière plate ou incurvée dans son ensemble, de préférence la zone incurvée étant incurvée dans la direction de l'environnement entourant le feu (1), en particulier le feu de signalisation.

5. Feu (1) selon l'une quelconque des revendications précédentes, **caractérisée en ce que** la première zone (10), qui comprend de préférence une ou plusieurs structures de déviation de la lumière (34), est formée au moins partiellement, de préférence complètement, autour de la deuxième zone (11).

6. Feu (1) selon l'une quelconque des revendications précédentes, **caractérisée en ce que** le couvercle (2) comprenant au moins la première zone (10) et la deuxième zone (11) est formé d'une seule pièce.

7. Feu (1) selon l'une quelconque des revendications précédentes, **caractérisée en ce que** le feu (1), en particulier le feu de signalisation, comprend un boîtier (5), le couvercle (2) étant fixé, de préférence de manière amovible, au boîtier (5) au moyen de la première zone (10) du couvercle (2), et de préférence la deuxième zone (11) du couvercle (2) étant fixée, de préférence de manière amovible, à la première zone (10) du couvercle (2).

8. Feu (1) selon l'une quelconque des revendications précédentes, **caractérisée en ce que** la première zone (10) du couvercle (2) forme une première zone partielle (15) de la face visible (2), la deuxième zone (11) du couvercle (2) formant une deuxième zone partielle (17) de la face visible (3) du couvercle (2), et dans lequel sur la première zone partielle (15) de la face visible (3) et/ou au verso de la première zone partielle (16) de la face arrière (4) et/ou sur la deuxième zone partielle (17) de la face visible (3) et/ou au verso de la deuxième zone partielle (18) de la face arrière (4) est disposé un élément décoratif bidimensionnel (28) étant translucide, de préférence transparent, comprenant en particulier une feuille décorative (31), avec une face avant (29) et une face arrière (30), comprenant un élément graphique (55).

9. Feu (1) selon la revendication 8, **caractérisée en ce qu'**un diffuseur bidimensionnel (53) est disposé sur la face avant (29) de l'élément décoratif bidimensionnel (28) et/ou sur la face arrière (30) de l'élément décoratif bidimensionnel (28), de préférence sur la face arrière (30) de l'élément décoratif bidimensionnel (28).

10. Feu (1) selon l'une quelconque des revendications précédentes, **caractérisée en ce que** le premier moyen d'éclairage (25) comprend au moins une première DEL (24) et/ou le deuxième moyen d'éclairage (26) comprend au moins une deuxième DEL (24), le premier moyen d'éclairage (25) et/ou le deuxième moyen d'éclairage (26) pouvant être de préférence commandés indépendamment l'un de l'autre, en particulier en ce qui concerne leur émission de lumière.

11. Feu (1) selon l'une quelconque des revendications précédentes, **caractérisée en ce que** le feu (1) comprend au moins un guide de lumière (64), le moyen d'éclairage (23) comprenant au moins le premier moyen d'éclairage (25) et/ou le second moyen d'éclairage (26), de préférence exclusivement le premier moyen d'éclairage (25), dans lequel la lumière d'au moins le premier moyen d'éclairage (25) et/ou le deuxième moyen d'éclairage (26), de préférence du premier moyen d'éclairage (25) exclusivement présent, atteint au moins partiellement, via l'au moins un guide de lumière (64), la deuxième zone partielle (18) de la face arrière (4) du couvercle (2) formée par la deuxième zone (11) du couvercle (2).

12. Feu (1) selon la revendication 11, **caractérisée en ce que** le guide de lumière (64) comprend un côté avant (65) et un côté arrière (66) ainsi qu'une surface latérale (75) qui relie le côté avant (65) et le côté arrière (66) l'un à l'autre, le côté avant (65) du guide de lumière (64) faisant face à la deuxième zone partielle (18) du côté arrière (4) du couvercle (2) formé par la deuxième zone (11) du couvercle (2), le guide de lumière (64) comportant de préférence une ou plusieurs structures de déviation de la lumière (34) pour dévier la lumière se propageant dans le guide de lumière (64) vers la deuxième zone partielle (18) de la face arrière (4) du couvercle (2) formée par la deuxième zone (11) du couvercle (2), de préférence, la lumière du premier moyen d'éclairage (25) et/ou du second moyen d'éclairage (26), plus préférablement du premier moyen d'éclairage (25) exclusivement présent, pénétrant dans le guide de lumière (64) par la face arrière (66) et/ou la surface latérale (75) du guide de lumière (64).

13. Feu (1) selon l'une quelconque des revendications précédentes, **caractérisée en ce que** le feu (1) comprend au moins une carte de circuit imprimé (38), de préférence une seule carte de circuit imprimé (38), les moyens d'éclairage (23) étant disposés sur l'au moins une carte de circuit imprimé (38), de préférence sur la seule carte de circuit imprimé (38).

14. Feu (1) selon l'une quelconque des revendications précédentes, **caractérisé en ce que** le feu (1), en particulier le feu de signalisation, est conçu comme un feu arrière, un feu de freinage, un feu de freinage supplémentaire, un feu de brouillard arrière, un feu de brouillard arrière supplémentaire, un clignotant, un clignotant latéral, un phare, en particulier un feu de marche arrière.

15. Véhicule équipé d'un feu (1), en particulier d'un feu de signalisation, selon l'une quelconque des revendications précédentes, **caractérisé en ce que**, de préférence, le feu (1), en particulier le feu de signalisation, est placé à l'arrière du véhicule.

16. Procédé de fabrication d'un feu (1), en particulier d'un feu de signalisation, selon l'une des quelconque revendications 1 à 14, qui comprend un espace intérieur (19) avec au moins une première zone d'espace intérieur (20) et une deuxième zone d'espace intérieur (21), comprenant les étapes suivantes :
- fournir un couvercle (2), en particulier un couvercle (2) en plastique, avec une face visible (3) et une face arrière (4) ;
- produire une ou plusieurs structures de déviation de la lumière (34), la ou les structures de déviation de la lumière (34) formant au moins une zone (42) de la face visible (3) et/ou de la face arrière (4) du couvercle (2) et/ou étant disposées à l'intérieur du couvercle (2),
le couvercle (2) comprenant au moins une première zone (10) et une deuxième zone (11), la première zone (10) et/ou la deuxième zone (11) comprenant la ou les structures de déviation de la lumière (34),
le couvercle (2) comprenant au moins une première cloison de lumière (48), au moins la première zone (10) et la deuxième zone (11) du couvercle (2) étant complètement séparées optiquement l'une de l'autre par la première cloison de lumière (48),
et le feu (1) comprenant au moins une deuxième cloison de lumière (22) qui est directement adjacente à la première cloison de lumière (48) et s'étend dans l'espace intérieur (19) du feu (1), la deuxième cloison de lumière (22) séparant optiquement au moins partiellement la première zone de l'espace intérieur (20) et la deuxième zone de l'espace intérieur (21) l'une de l'autre.
